# EUROPEAN PATENT APPLICATION

(11) **EP 3 287 866 A1**
(43) Date of publication of application: **28.02.2018**
(21) Application number: 17187806.9
(22) Date of filing: 24.08.2017
(51) Int. Cl.: G06F 3/00, G06F 9/54, H04N 7/14

(54) **ELECTRONIC DEVICE AND METHOD OF PROVIDING IMAGE ACQUIRED BY IMAGE SENSOR TO APPLICATION**

(30) Priority: 25.08.2016 KR 20160108453
(71) Applicant: Samsung Electronics Co., Ltd., Gyeonggi-do 16677 (KR)
(72) Inventor: GOO, Jamin, 16677 Gyeonggi-do, (KR); KIM, Hyungwoo, 16677 Gyeonggi-do, (KR); PARK, Jihyun, 16677 Gyeonggi-do, (KR); YU, Seunghyuk, 16677 Gyeonggi-do, (KR); LEE, Dongkyu, 16677 Gyeonggi-do, (KR); JEONG, Jinhong, 16677 Gyeonggi-do, (KR); LEE, Kyunghee, 16677 Gyeonggi-do, (KR); LEE, Juyeong, 16677 Gyeonggi-do, (KR)
(74) Representative: HGF Limited

(57) **Abstract**

An electronic device includes a camera module including image acquiring circuitry and at least one lens; a display configured to display an image acquired through the camera module; a processor electrically connected to the camera module and the display; and a memory electrically connected to the processor, wherein the memory stores instructions which, when executed, cause the processor to provide at least a portion of at least one image acquired through the camera module to the first application in response to a camera service request of a first application and to distribute the at least one image to the first application and the second application, when the processor receives a camera service request from a second application while the processor provides the at least a partial image to the first application.

## Description

### BACKGROUND

### Field

The present disclosure relates generally to an electronic device, and for example, to an electronic device that can acquire an image with, for example, an image sensor and that can process the acquired image through at least one application.

### Description of Related Art

With the development of mobile communication technology and processor technology, a mobile terminal device (hereinafter, an electronic device) can implement various applications in addition to a conventional communication function. For example, various applications such as an Internet browser, game player, and calculator may be developed to be used in an electronic device. Further, the electronic device may have a camera module to acquire an image, provide the acquired images to an application, and the application may perform various functions such as an output of an image on a display, editing of an image, and object recognition.

In the electronic device, a plurality of applications using a camera function is installed, and a plurality of applications may be simultaneously executed. For example, by simultaneously executing an application that performs a general photographing function and an application that performs a zoom photographing function, a general photographing screen and a zoom photographing screen may be simultaneously displayed on a display to perform photographing. Further, when the electronic device may move autonomously, various applications may be used simultaneously, such as a peripheral recognition application, baby care application, and an application for recognizing an object such as a user for autonomous movement.

In order to simultaneously execute a plurality of applications using a camera function, an image photographed by a camera should be simultaneously provided to a plurality of applications.

In a conventional electronic device, when one application accesses a camera module through a framework to acquire an image, another application cannot access the camera module. Accordingly, a plurality of applications using a camera function may not be simultaneously executed through multitasking.

### SUMMARY

The present disclosure addresses the above problem and provides an electronic device that can acquire an image with, for example, an image sensor and that can process the acquired image through at least one application.

In accordance with an example aspect of the present disclosure, an electronic device includes a camera module comprising image capturing circuitry and including at least one lens; a display configured to display an image acquired through the camera module; a processor electrically connected to the camera module and the display; and a memory electrically connected to the processor, wherein the memory stores instructions which, when executed, cause the processor to perform operations comprising: providing at least a portion of at least one image acquired through the camera module to a first application in response to a camera service request of the first application and distributing the at least one image to the first application and a second application, when the processor receives a camera service request from the second application while the processor provides the at least a partial image to the first application.

In accordance with another example aspect of the present disclosure, an electronic device includes a housing including a plurality of surfaces; at least one image sensor exposed through at least one of the surfaces of the housing and configured to generate image data; a wireless communication circuit positioned inside the housing; a volatile memory positioned inside the housing; at least one processor positioned inside the housing and electrically connected to the wireless communication circuit and the volatile memory; and a non-volatile memory electrically connected to the processor, wherein the non-volatile memory stores at least a portion of a first application program or a second application program and wherein the non-volatile memory further stores instructions that, when executed, cause the processor to perform at least one operation comprising: receiving a first request from the first application program, wherein the first request is associated with at least a first portion of the image data from the image sensor; receiving a second request from the second application program, wherein the second request is associated with at least a second portion of the image data from the image sensor; processing the first request after receiving the first request; and processing the second request after receiving the second request, while simultaneously, sequentially, and/or interleavedlyprocessing the first request, without finishing processing of the first request.

In accordance with another example aspect of the present disclosure, an electronic device includes a camera module including image capturing circuitry and at least one lens; a display configured to display an image acquired through the camera module; a processor electrically connected to the camera module and the display; and a memory electrically connected to the processor, storing instructions which, when executed, cause the the processor to at least: execute a first application and a second application, provide a GUI that can control an image photographing function in response to a camera service request of the first application and the second application, acquire at least one image in response to an input to the GUI, provide at least a portion of the acquired image to the first application, and provide at least another image to the second application.

### BRIEF DESCRIPTION OF THE DRAWINGS

The above aspects, features, and attendant advantages of the present disclosure will be more apparent and readily appreciated from the following detailed description, taken in conjunction with the accompanying drawings, in which like reference numerals refer to like elements, and wherein:
FIG. 1 is a diagram illustrating an example electronic device within a network environment according to various example embodiments of the present disclosure;
FIG. 2 is a block diagram illustrating an example electronic device according to various example embodiments of the present disclosure;
FIG. 3 is a block diagram illustrating an example program module according to various example embodiments of the present disclosure;
FIG. 4 is a diagram illustrating an example of a screen displayed in an electronic device according to execution of a plurality of applications;
FIG. 5 is a block diagram illustrating an example electronic device according to various example embodiments of the present disclosure;
FIGS. 6A, 6B, 6C, 6D, 6E and 6F are diagrams illustrating an example process of providing an image generated in a camera of an electronic device to a display;
FIGS. 7A and 7B are diagrams illustrating an example process of providing an image generated in a camera of an electronic device to an application;
FIG. 8A is a flowchart illustrating an example method of providing an image in an electronic device according to various example embodiments of the present disclosure;
FIG. 8B is a message flow diagram illustrating an example image distribution method according to various example embodiments of the present disclosure;
FIGS. 9A, 9B, 9C and 9D are message flow diagrams illustrating an example process in which each application requests to transmit an image to a camera according to various example embodiments of the present disclosure;
FIGS. 10A, 10B, 10C, 10D, 10E, 10F, 10G, 10H and 10I are message flow diagrams illustrating an example method of distributing an image generated in a camera to each application according to various example embodiments of the present disclosure;
FIG. 11 is a diagram illustrating an example of a screen in which global UX is displayed in an electronic device according to various example embodiments of the present disclosure;
FIGS. 12A and 12B are diagrams illustrating example signal processing flow according to an input of global UX according to various example embodiments of the present disclosure; and
FIGS. 13A, 13B and 13C are message flow diagrams illustrating an example image distribution method according to various example embodiments of the present disclosure.

### DETAILED DESCRIPTION

Hereinafter, various example embodiments of the present disclosure are described in greater detail with reference to the accompanying drawings. While the present disclosure may be embodied in many different forms, specific embodiments of the present disclosure are illustrated in drawings and are described herein in detail, with the understanding that the present disclosure is to be considered as an example of the principles of the disclosure and is not intended to limit the disclosure to the specific embodiments illustrated. The same reference numbers are used throughout the drawings to refer to the same or like parts.

An expression "comprising" or "may comprise" used in the present disclosure indicates presence of a corresponding function, operation, or element and does not limit additional at least one function, operation, or element. Further, in the present disclosure, a term "comprise" or "have" indicates presence of a characteristic, numeral, step, operation, element, component, or combination thereof described in the disclosure and does not exclude presence or addition of at least one other characteristic, numeral, step, operation, element, component, or combination thereof.

In the present disclosure, an expression "or" includes any combination or the entire combination of together listed words. For example, "A or B" may include A, B, or A and B.

An expression of a first and a second in the present disclosure may represent various elements of the present disclosure, but do not limit corresponding elements. For example, the expression does not limit order and/or importance of corresponding elements. The expression may be used for distinguishing one element from another element. For example, both a first user device and a second user device are user devices and represent different user devices. For example, a first element may be referred to as a second element without deviating from the scope of the present disclosure, and similarly, a second element may be referred to as a first element.

When it is described that an element is "coupled" to another element, the element may be "directly coupled" to the other element or "electrically coupled" to the other element through a third element. However, when it is described that an element is "directly coupled" to another element, no element may exist between the element and the other element.

Terms used in the present disclosure are not to limit the present disclosure but to illustrate example embodiments. When using in a description of the present disclosure and the appended claims, a singular form includes a plurality of forms unless it is explicitly differently represented.

Unless differently defined, entire terms including a technical term and a scientific term used here have the same meaning as a meaning that may be generally understood by a person of common skill in the art. It should be understood that generally using terms defined in a dictionary have a meaning corresponding to that of a context of related technology and are not analyzed as an ideal or excessively formal meaning unless explicitly defined.

In this disclosure, an electronic device may be a device that involves a communication function. For example, an electronic device may be a smart phone, a tablet PC (Personal Computer), a mobile phone, a video phone, an e-book reader, a desktop PC, a laptop PC, a netbook computer, a PDA (Personal Digital Assistant), a PMP (Portable Multimedia Player), an MP3 player, a portable medical device, a digital camera, or a wearable device (e.g., an HMD (Head-Mounted Device) such as electronic glasses, electronic clothes, an electronic bracelet, an electronic necklace, an electronic accessory, or a smart watch), or the like, but is not limited thereto.

According to some embodiments, an electronic device may be a smart home appliance that involves a communication function. For example, an electronic device may be a TV, a DVD (Digital Video Disk) player, audio equipment, a refrigerator, an air conditioner, a vacuum cleaner, an oven, a microwave, a washing machine, an air cleaner, a set-top box, a TV box (e.g., Samsung HomeSync™, Apple TV™, Google TV™, etc.), a game console, an electronic dictionary, an electronic key, a camcorder, or an electronic picture frame, or the like, but is not limited thereto.

According to some embodiments, an electronic device may be a medical device (e.g., MRA (Magnetic Resonance Angiography), MRI (Magnetic Resonance Imaging), CT (Computed Tomography), ultrasonography, etc.), a navigation device, a GPS (Global Positioning System) receiver, an EDR (Event Data Recorder), an FDR (Flight Data Recorder), a car infotainment device, electronic equipment for ship (e.g., a marine navigation system, a gyrocompass, etc.), avionics, security equipment, or an industrial or home robot, or the like, but is not limited thereto.

According to some embodiments, an electronic device may be furniture or part of a building or construction having a communication function, an electronic board, an electronic signature receiving device, a projector, or various measuring instruments (e.g., a water meter, an electric meter, a gas meter, a wave meter, etc.), or the like, but is not limited thereto. An electronic device disclosed herein may be one of the above-mentioned devices or any combination thereof. As well understood by those skilled in the art, the above-mentioned electronic devices are examples only and not to be considered as a limitation of this disclosure.

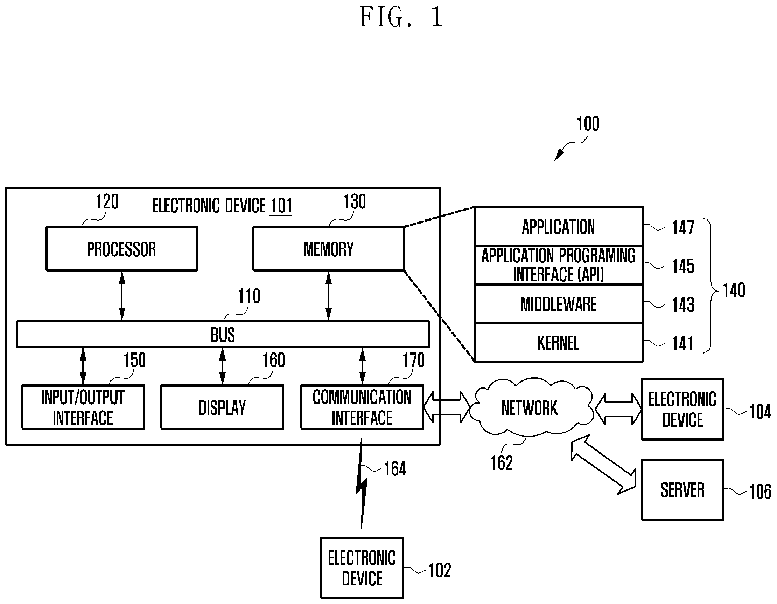

FIG. 1 is a block diagram illustrating an example electronic apparatus in a network environment according to an example embodiment of the present disclosure.

With reference to FIG. 1, the electronic apparatus 101 may include a bus 110, a processor (e.g., including processing circuitry) 120, a memory 130, an input/output interface (e.g., including input/output circuitry) 150, a display 160, and a communication interface (e.g., including communication circuitry) 170.

The bus 110 may be a circuit for interconnecting elements described above and for allowing a communication, e.g. by transferring a control message, between the elements described above.

The processor 120 may include various processing circuitry and can receive commands from the above-mentioned other elements, e.g. the memory 130, the input/output interface 150, the display 160, and the communication interface 170, through, for example the bus 110, can decipher the received commands, and perform operations and/or data processing according to the deciphered commands.

The memory 130 can store commands received from the processor 120 and/or other elements, e.g. the input/output interface 150, the display 160, and the communication interface 170, and/or commands and/or data generated by the processor 120 and/or other elements. The memory 130 may include software and/or programs 140, such as a kernel 141, middleware 143, an Application Programming Interface (API) 145, and an application 147. Each of the programming modules described above may be configured by software, firmware, hardware, and/or combinations of two or more thereof.

The kernel 141 can control and/or manage system resources, e.g. the bus 110, the processor 120 or the memory 130, used for execution of operations and/or functions implemented in other programming modules, such as the middleware 143, the API 145, and/or the application 147. Further, the kernel 141 can provide an interface through which the middleware 143, the API 145, and/or the application 147 can access and then control and/or manage an individual element of the electronic apparatus 101.

The middleware 143 can perform a relay function which allows the API 145 and/or the application 147 to communicate with and exchange data with the kernel 141. Further, in relation to operation requests received from at least one of an application 147, the middleware 143 can perform load balancing in relation to the operation requests by, for example giving a priority in using a system resource, e.g. the bus 110, the processor 120, and/or the memory 130, of the electronic apparatus 101 to at least one application from among the at least one of the application 147.

The API 145 is an interface through which the application 147 can control a function provided by the kernel 141 and/or the middleware 143, and may include, for example at least one interface or function for file control, window control, image processing, and/or character control.

The input/output interface 150 may include various input/output circuitry and can receive, for example a command and/or data from a user, and transfer the received command and/or data to the processor 120 and/or the memory 130 through the bus 110. The display 160 can display an image, a video, and/or data to a user.

The communication interface 170 can establish a communication between the electronic apparatus 101 and another electronic devices 102 and 104 and/or a server 106. The communication interface 170 can support short range communication protocols 164, e.g. a Wireless Fidelity (WiFi) protocol, a BlueTooth (BT) protocol, and a Near Field Communication (NFC) protocol, communication networks, e.g. Internet, Local Area Network (LAN), Wire Area Network (WAN), a telecommunication network, a cellular network, and a satellite network, or a Plain Old Telephone Service (POTS), or any other similar and/or suitable communication networks, such as network 162, or the like. Each of the electronic devices 102 and 104 may be a same type and/or different types of electronic apparatus.

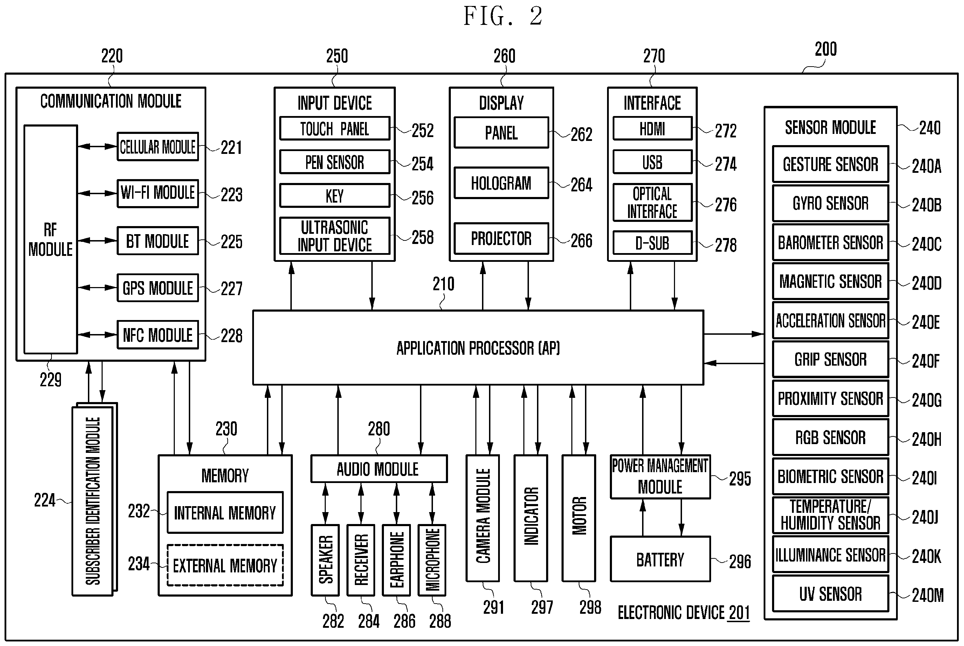

FIG. 2 is a block diagram illustrating an example electronic device 201 in accordance with an example embodiment of the present disclosure. The electronic device 201 may form, for example the whole or part of the electronic device 101 illustrated in FIG. 1. With reference to FIG. 2, the electronic device 201 may include at least one application processor (AP) (e.g., including processing circuitry) 210, a communication module (e.g., including communication circuitry) 220, a subscriber identification module (SIM) card 224, a memory 230, a sensor module 240, an input device (e.g., including input circuitry) 250, a display 260, an interface (e.g., including interface circuitry) 270, an audio module 280, a camera module 291, a power management module 295, a battery 296, an indicator 297, and a motor 298.

The AP 210 may include various processing circuitry, and drive an operating system or applications, control a plurality of hardware or software components connected thereto, and also perform processing and operation for various data including multimedia data. The AP 210 may be formed of system-on-chip (SoC), for example. According to an embodiment, the AP 210 may further include a graphic processing unit (GPU) (not shown).

The communication module 220 (e.g., the communication interface 170) may perform a data communication with any other electronic device (e.g., the electronic device 104 or the server 106) connected to the electronic device 101 (e.g., the electronic device 201) through the network. According to an embodiment, the communication module 220 may include various communication circuitry, such as, for example and without limitation, a cellular module 221, a WiFi module 223, a BT module 225, a GPS module 227, an NFC module 228, and an RF (Radio Frequency) module 229.

The cellular module 221 may offer a voice call, a video call, a message service, an internet service, or the like through a communication network (e.g., LTE, LTE-A, CDMA, WCDMA, UMTS, WiBro, or GSM, etc.). Additionally, the cellular module 221 may perform identification and authentication of the electronic device in the communication network, using the SIM card 224. According to an embodiment, the cellular module 221 may perform at least part of functions the AP 210 can provide. For example, the cellular module 221 may perform at least part of a multimedia control function.

According to an embodiment, the cellular module 221 may include a communication processor (CP). Additionally, the cellular module 221 may be formed of SoC, for example. Although some elements such as the cellular module 221 (e.g., the CP), the memory 230, or the power management module 295 are shown as separate elements being different from the AP 210 in FIG. 2, the AP 210 may be formed to have at least part (e.g., the cellular module221) of the above elements in an embodiment.

According to an embodiment, the AP 210 or the cellular module 221 (e.g., the CP) may load commands or data, received from a nonvolatile memory connected thereto or from at least one of the other elements, into a volatile memory to process them. Additionally, the AP 210 or the cellular module 221 may store data, received from or created at one or more of the other elements, in the nonvolatile memory.

Each of the WiFi module 223, the BT module 225, the GPS module 227 and the NFC module 228 may include a processor for processing data transmitted or received therethrough. Although FIG. 2 shows the cellular module 221, the WiFi module 223, the BT module 225, the GPS module 227 and the NFC module 228 as different blocks, at least part of them may be contained in a single IC (Integrated Circuit) chip or a single IC package in an embodiment. For example, at least part (e.g., the CP corresponding to the cellular module 221 and a WiFi processor corresponding to the WiFi module 223) of respective processors corresponding to the cellular module 221, the WiFi module 223, the BT module 225, the GPS module 227 and the NFC module 228 may be formed as a single SoC.

The RF module 229 may transmit and receive data, e.g., RF signals or any other electric signals. Although not shown, the RF module 229 may include a transceiver, a PAM (Power Amp Module), a frequency filter, an LNA (Low Noise Amplifier), or the like. Also, the RF module 229 may include any component, e.g., a wire or a conductor, for transmission of electromagnetic waves in a free air space. Although FIG. 2 shows that the cellular module 221, the WiFi module 223, the BT module 225, the GPS module 227 and the NFC module 228 share the RF module 229, at least one of them may perform transmission and reception of RF signals through a separate RF module in an embodiment.

The SIM card 224 may be a specific card formed of SIM and may be inserted into a slot formed at a certain place of the electronic device 201. The SIM card 224 may contain therein an ICCID (Integrated Circuit Card IDentifier) or an IMSI (International Mobile Subscriber Identity).

The memory 230 (e.g., the memory 230) may include an internal memory 232 and/or an external memory 234. The internal memory 232 may include, for example at least one of a volatile memory (e.g., DRAM (Dynamic RAM), SRAM (Static RAM), SDRAM (Synchronous DRAM), etc.) or a nonvolatile memory (e.g., OTPROM (One Time Programmable ROM), PROM (Programmable ROM), EPROM (Erasable and Programmable ROM), EEPROM (Electrically Erasable and Programmable ROM), mask ROM, flash ROM, NAND flash memory, NOR flash memory, etc.).

According to an embodiment, the internal memory 232 may have the form of an SSD (Solid State Drive) . The external memory 234 may include a flash drive, e.g., CF (Compact Flash), SD (Secure Digital), Micro-SD (Micro Secure Digital), Mini-SD (Mini Secure Digital), xD (extreme Digital), memory stick, or the like. The external memory 234 may be functionally connected to the electronic device 201 through various interfaces. According to an embodiment, the electronic device 201 may further include a storage device or medium such as a hard drive.

The sensor module 240 may measure physical quantity or sense an operating status of the electronic device 201, and then convert measured or sensed information into electric signals. The sensor module 240 may include, for example at least one of a gesture sensor 240A, a gyro sensor 240B, an atmospheric (e.g., barometer) sensor 240C, a magnetic sensor 240D, an acceleration sensor 240E, a grip sensor 240F, a proximity sensor 240G, a color sensor 240H (e.g., RGB (Red, Green, Blue) sensor), a biometric sensor 240I, a temperature-humidity sensor 240J, an illumination (e.g., illuminance/light) sensor 240K, and a UV (ultraviolet) sensor 240M. Additionally or alternatively, the sensor module 240 may include, e.g., an E-nose sensor (not shown), an EMG (electromyography) sensor (not shown), an EEG (electroencephalogram) sensor (not shown), an ECG (electrocardiogram) sensor (not shown), an IR (infrared) sensor (not shown), an iris scan sensor (not shown), or a finger scan sensor (not shown). Also, the sensor module 240 may include a control circuit for controlling one or more sensors equipped therein.

The input device 250 may include various input circuitry, such as, for example and without limitation, a touch panel 252, a digital pen sensor 254, a key 256, or an ultrasonic input unit 258. The touch panel 252 may recognize a touch input in a manner of capacitive type, resistive type, infrared type, or ultrasonic type. Also, the touch panel 252 may further include a control circuit. In case of a capacitive type, a physical contact or proximity may be recognized. The touch panel 252 may further include a tactile layer. In this case, the touch panel 252 may offer a tactile feedback to a user.

The digital pen sensor 254 may be formed in the same or similar manner as receiving a touch input or by using a separate recognition sheet. The key 256 may include, for example a physical button, an optical key, or a keypad. The ultrasonic input unit 258 is a specific device capable of identifying data by sensing sound waves with a microphone 288 in the electronic device 201 through an input tool that generates ultrasonic signals, thus allowing wireless recognition. According to an embodiment, the electronic device 201 may receive a user input from any external device (e.g., a computer or a server) connected thereto through the communication module 220.

The display 260 (e.g., the display 250) may include a panel 262, a hologram 264, or a projector 266. The panel 262 may be, for example LCD (Liquid Crystal Display), AM-OLED (Active Matrix Organic Light Emitting Diode), or the like. The panel 262 may have a flexible, transparent or wearable form. The panel 262 may be formed of a single module with the touch panel 252. The hologram 264 may show a stereoscopic image in the air using interference of light. The projector 266 may project an image onto a screen, which may be located at the inside or outside of the electronic device 201. According to an embodiment, the display 260 may further include a control circuit for controlling the panel 262, the hologram 264, and the projector 266.

The interface 270 may include various interface circuitry, such as, for example and without limitation, an HDMI (High-Definition Multimedia Interface) 272, a USB (Universal Serial Bus) 274, an optical interface 276, or a D-sub (D-subminiature) 278. The interface 270 may be contained, for example in the communication interface 260 shown in FIG. 2. Additionally or alternatively, the interface 270 may include, for example an MHL (Mobile High-definition Link) interface, an SD (Secure Digital) card/MMC (Multi-Media Card) interface, or an IrDA (Infrared Data Association) interface.

The audio module 280 may perform a conversion between sounds and electric signals. The audio module 280 may process sound information inputted or outputted through a speaker 282, a receiver 284, an earphone 286, or a microphone 288.

The camera module 291 is a device capable of obtaining still images and moving images. According to an embodiment, the camera module 291 may include at least one image sensor (e.g., a front sensor or a rear sensor), a lens (not shown), an ISP (Image Signal Processor, not shown), or a flash (e.g., LED or xenon lamp, not shown).

The power management module 295 may manage electric power of the electronic device 201. Although not shown, the power management module 295 may include, for example a PMIC (Power Management Integrated Circuit), a charger IC, or a battery or fuel gauge.

The PMIC may be formed, for example of an IC chip or SoC. Charging may be performed in a wired or wireless manner. The charger IC may charge a battery 296 and prevent overvoltage or overcurrent from a charger. According to an embodiment, the charger IC may have a charger IC used for at least one of wired and wireless charging types. A wireless charging type may include, for example a magnetic resonance type, a magnetic induction type, or an electromagnetic type. Any additional circuit for a wireless charging may be further used such as a coil loop, a resonance circuit, or a rectifier.

The battery gauge may measure the residual amount of the battery 296 and a voltage, current or temperature in a charging process. The battery 296 may store or create electric power therein and supply electric power to the electronic device 201. The battery 296 may be, for example a rechargeable battery or a solar battery.

The indicator 297 may show thereon a current status (e.g., a booting status, a message status, or a recharging status) of the electronic device 201 or of its part (e.g., the AP 210). The motor 298 may convert an electric signal into a mechanical vibration. Although not shown, the electronic device 201 may include a specific processor (e.g., GPU) for supporting a mobile TV. This processor may process media data that comply with standards of DMB (Digital Multimedia Broadcasting), DVB (Digital Video Broadcasting), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

The term "module" used in this disclosure may refer, for example, to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of a dedicated processor, a CPU, an ASIC (Application-Specific Integrated Circuit) chip, FPGAs (Field-Programmable Gate Arrays), and programmable-logic device, which have been known or are to be developed.

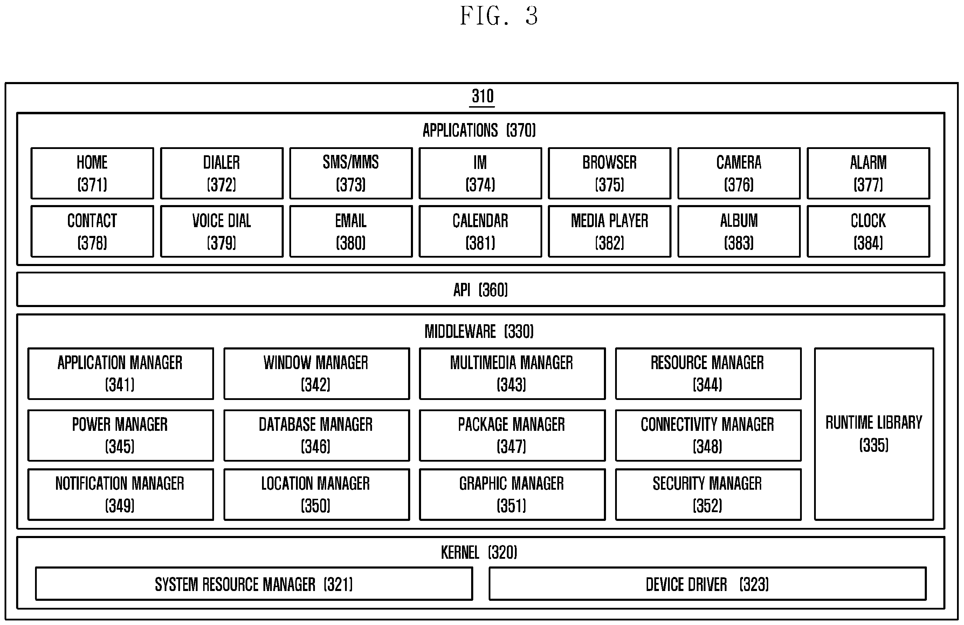

FIG. 3 is a block diagram illustrating an example configuration of a programming module 310 according to an example embodiment of the present disclosure.

The programming module 310 may be included (or stored) in the electronic device 201 (e.g., the memory 230) illustrated in FIG. 2 or may be included (or stored) in the electronic device 101 (e.g., the memory 130) illustrated in FIG. 1. At least a part of the programming module 310 may be implemented in software, firmware, hardware, or a combination of two or more thereof. The programming module 310 may be implemented in hardware, and may include an OS controlling resources related to an electronic device (e.g., the electronic device 101 or 201) and/or various applications (e.g., an application 370) executed in the OS. For example, the OS may be Android, iOS, Windows, Symbian, Tizen, Bada, and the like.

With reference to FIG. 3, the programming module 310 may include a kernel 320, a middleware 330, an API 360, and/or the application 370.

The kernel 320 (e.g., the kernel 141) may include a system resource manager 321 and/or a device driver 323. The system resource manager 321 may include, for example a process manager (not illustrated), a memory manager (not illustrated), and a file system manager (not illustrated). The system resource manager 321 may perform the control, allocation, recovery, and/or the like of system resources. The device driver 323 may include, for example a display driver (not illustrated), a camera driver (not illustrated), a Bluetooth driver (not illustrated), a shared memory driver (not illustrated), a USB driver (not illustrated), a keypad driver (not illustrated), a Wi-Fi driver (not illustrated), and/or an audio driver (not illustrated). Also, according to an embodiment of the present disclosure, the device driver 323 may include an Inter-Process Communication (IPC) driver (not illustrated).

As one of various embodiments of the present disclosure, the display driver may control at least one display driver IC (DDI). The display driver may include the functions for controlling the screen according to the request of the application 370.

The middleware 330 may include multiple modules previously implemented so as to provide a function used in common by the applications 370. Also, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example a library module used by a complier, in order to add a new function by using a programming language during the execution of the application 370. According to an embodiment of the present disclosure, the runtime library 335 may perform functions which are related to input and output, the management of a memory, an arithmetic function, and/or the like.

The application manager 341 may manage, for example a life cycle of at least one of the applications 370. The window manager 342 may manage GUI resources used on the screen. For example, when at least two displays 260 are connected, the screen may be differently configured or managed in response to the ratio of the screen or the action of the application 370. The multimedia manager 343 may detect a format used to reproduce various media files and may encode or decode a media file through a codec appropriate for the relevant format. The resource manager 344 may manage resources, such as a source code, a memory, a storage space, and/or the like of at least one of the applications 370.

The power manager 345 may operate together with a Basic Input/Output System (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as, for example Wi-Fi and Bluetooth. The notification manager 349 may display or report, to the user, an event such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, and the like. According to an embodiment of the present disclosure, when the electronic device (e.g., the electronic device 201) has a telephone function, the middleware 330 may further include a telephony manager (not illustrated) for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. Also, the middleware 330 may dynamically delete some of the existing elements, or may add new elements. Accordingly, the middleware 330 may omit some of the elements described in the various embodiments of the present disclosure, may further include other elements, or may replace the some of the elements with elements, each of which performs a similar function and has a different name.

The API 360 (e.g., the API 145) is a set of API programming functions, and may be provided with a different configuration according to an OS. In the case of Android or iOS, for example one API set may be provided to each platform. In the case of Tizen, for example two or more API sets may be provided to each platform.

The applications 370 (e.g., the applications 147) may include, for example a preloaded application and/or a third party application. The applications 370 (e.g., the applications 147) may include, for example a home application 371, a dialer application 372, a Short Message Service (SMS) /Multimedia Message Service (MMS) application 373, an Instant Message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 310 may be implemented by instructions stored in a non-transitory computer-readable storage medium. When the instructions are executed by one or more processors (e.g., the application processor 210), the one or more processors may perform functions corresponding to the instructions. The non-transitory computer-readable storage medium may be, for example the memory 220. At least a part of the programming module 310 may be implemented (e.g., executed) by, for example the one or more processors. At least a part of the programming module 310 may include, for example a module, a program, a routine, a set of instructions, and/or a process for performing one or more functions.

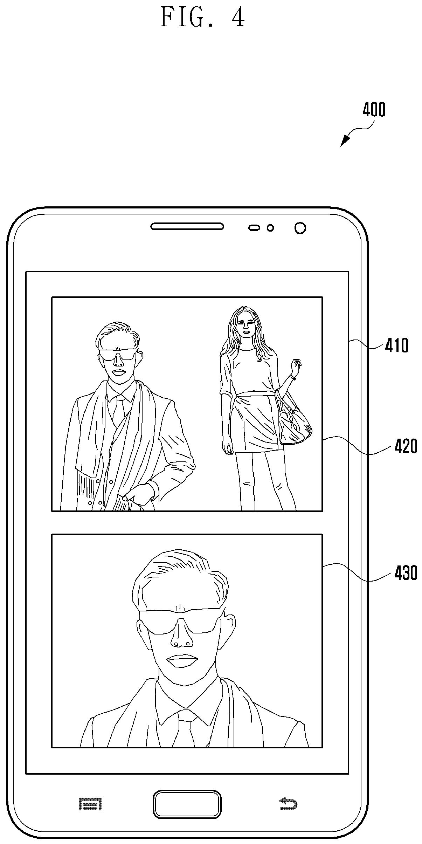

FIG. 4 is a diagram illustrating an example of a screen displayed in an electronic device 400 according to execution of a plurality of applications.

According to various example embodiments, the electronic device 400 may simultaneously execute a plurality of applications in a foreground and/or a background, and a screen generated in a plurality of applications executed in the foreground may be simultaneously displayed on a display 410.

As illustrated in FIG. 4, the electronic device 400 may display a screen generated by simultaneously or sequentially driving two applications on the display 410. According to various example embodiments, a first application 420 and a second application 430 may be an application using a camera function. For example, the first application 420 and/or the second application 430 may be applications related to various functions such as a function of capturing or recording an image through a camera module, a function of editing an acquired image in real time, and a function of recognizing an object through image photographing.

A first image displayed in the first application 420 and a second image displayed in the second application 430 may be the same image or different images. According to an example embodiment, when the first image and the second image are different images, the first image and the second image may be images of different areas acquired with general photographing and zoom photographing by the same camera or may be photographed images of the same area, but they may be different images in a resolution and/or a frame rate, a frame order, a compression ratio, brightness, ISO, chroma, color space, or a focus area.

According to various example embodiments, the electronic device 400 may have only one image sensor or a plurality of image sensors. The first image and the second image may be images acquired by one image sensor or may be images acquired by different image sensors.

FIG. 4 illustrates a mobile terminal device such as a smart phone as an example of the electronic device 400, but various example embodiments of the present disclosure are not limited thereto, and in various example embodiments of the present disclosure, the electronic device 400 may be various forms of electronic device 400 that may photograph an image using a camera module and that may execute various applications with a processor and a memory. For example, the electronic device 400 may be a robot. According to an example embodiment, the electronic device 400 may include a moving mechanism, for example at least one of a robotic leg or arm, a wheel, a caterpillar, a propeller, a wing, a fin, an engine, a motor, or a rocket, and the first application may be related to operation of such a moving mechanism.

According to various example embodiments, at least one of the first application and the second application may be executed by an external device (not shown) of the electronic device 400. In this case, the electronic device 400 may communicate with the second application of the external device through a communication circuit.

For example, because the robot has software modules such as autonomous running, object recognition, person recognition, and situation recognition, the robot may operate at least one of the software modules as needed or always. Further, according to an example embodiment, the robot may autonomously store an image through a memory or a storage device positioned inside the robot for various objects (e.g., crime prevention record) or may upload an image to an external storage device (NAS, CLOUD). According to an example embodiment, the robot may photograph a picture through a module that supports a laughter recognition function for an object such as life logging and detect a specific person using a situation recognition module and/or a person recognition module. For example, when a specific person is a baby, the robot may operate an application that supports a baby care function. Alternatively, for example when it is determined that nobody exists at a designated area (e.g., within a home, within a company), the robot may operate an application that supports a visitor detection function.

According to an example embodiment, the above-described applications may individually or simultaneously operate. For example, when a user performs audiovisual communication through the robot, the robot may recognize a person and a peripheral thing with a camera image when the user moves while using a camera image for a communication object and may be simultaneously used for following a person through an autonomous behavior or rotating/moving a joint.

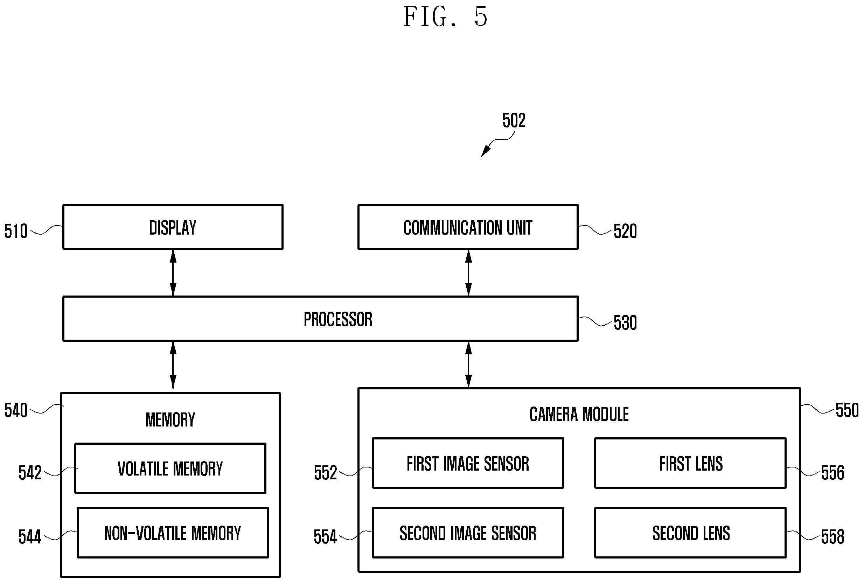

FIG. 5 is a block diagram illustrating an example configuration of an electronic device 500 according to various example embodiments of the present disclosure.

As illustrated in FIG. 5, the electronic device 500 includes a display 510, communication circuit (e.g., including communication circuitry) 520, processor (e.g., including processing circuitry) 530, memory 540, and camera module (e.g., including image acquiring circuitry) 550. Although some of illustrated configurations are omitted or substituted, various example embodiments of the present disclosure may be implemented. Further, the electronic device 500 may include at least a portion of a configuration and/or a function of the electronic device 101 of FIG. 1 and/or the electronic device 201 of FIG. 2.

According to various example embodiments, the display 510 displays an image, and the display of the image may be implemented with any one of a Liquid Crystal Display (LCD), Light-Emitting Diode (LED) display, Organic Light-Emitting Diode (OLED) display, Micro Electro Mechanical Systems (MEMS) display, and electronic paper display, but the present disclosure is not limited thereto. The display 510 may include at least a portion of a configuration and/or a function of the display 160 of FIG. 1 and/or the display 260 of FIG. 2. The display 510 may include a touch screen panel (not shown), and the touch screen panel may detect a touch input or a hovering input to a window (not shown) provided at a front surface of the display 510.

According to an example embodiment, the display may not exist, one display may exist, or at least one display may exist, and at least one application (e.g., a first application and/or a second application) provided in the electronic device 500 may display an image on the same display or display an image at different areas of the same display or another display, and at least one application may perform only a function instead of displaying an image.

According to various example embodiments, the display 510 may be electrically connected to the processor 530 and may display an image acquired through the camera module 550 according to data transmitted from the processor 530. The display 510 may be connected to another configuration (e.g., the camera module 550) of the electronic device 500 and/or an external device through the communication circuit 520. For example, an image may be received by the communication circuit 520 through various methods such as screen mirroring, live streaming, WIFI display, air play, and Digital Living Network Alliance (DLNA) from the external device, and an image received by the communication circuit 520 may be displayed on the display 510.

According to various example embodiments, the communication circuit 520 may include various communication circuitry and transmits and receives data to and from various external devices and may include at least a portion of a configuration and/or a function of the communication interface 170 of FIG. 1 and/or the communication module 220 of FIG. 2. The communication circuit 520 may communicate with an external device with, for example, a short range wireless communication method such as WiFi.

According to various example embodiments, the camera module 550 may include various image acquiring circuitry, such as, for example, and without limitation, at least one image sensor and/or lens and acquire an image through each image sensor and/or lens.

The camera module 550 may be exposed to the outside of the electronic device 500 through at least one surface (e.g., a front surface and/or a rear surface) of a housing (not shown) of the electronic device 500. An image acquired by the camera module 550 is digital image data and may be provided to the processor 530. The camera module 550 may include at least a portion of a configuration and/or a function of the camera module 291 of FIG. 2.

According to various example embodiments, the camera module 550 may be provided as a separate device from the electronic device 500, may be connected to the electronic device 500 by wire, and may be connected to the electronic device 500 by wireless through the communication circuit 520. According to an example embodiment, the camera module 550 may be a Universal Serial Bus (USB) camera, wireless camera, and Closed-Circuit Television (CCTV) camera.

FIG. 5 illustrates that the camera module 550 includes a first image sensor 552 and a second image sensor 554, and the camera module 550 may have only one image sensor and may have at least three image sensors. Further, FIG. 5 illustrates that the camera module 550 includes a first lens 556 and a second lens 558, and the camera module 550 may have only one image sensor and may have at least three images of such types of sensors. According to an example embodiment, the first lens and the second lens may have different attributes. For example, the first lens may be any one of an optical lens, fisheye lens, and general lens, and the second lens may be another one of such types of the lens. According to another example embodiment, the first lens and the second lens may be a lens having the same attribute.

When the camera module 550 includes a first image sensor 552 and a second image sensor 554, an image acquired by the first image sensor 552 may be provided to a first application and an image acquired by the second image sensor 554 may be provided to a second application. Alternatively, images acquired by the first image sensor 552 and the second image sensor 554 may be provided to both the first application and the second application. Further, when the camera module 550 includes a first lens 556 and a second lens 558, an image acquired by the first lens 556 may be provided to the first application and an image acquired by the second lens 558 may be provided to the second application. Alternatively, images acquired by the first lens 556 and the second lens 558 may be provided to both the first application and the second application.

According to various example embodiments, the memory 540 may include a known volatile memory 542 and non-volatile memory 544 and a detailed implementation example thereof is not limited thereto. The memory 540 may be positioned inside a housing to be electrically connected to the processor 530. The memory 540 may include at least a portion of a configuration and/or a function of the memory 130 of FIG. 1 and/or the memory 230 of FIG. 2.

The non-volatile memory 544 may include at least one of One Time Programmable ROM (OTPROM), PROM, Erasable Programmable Read-Only Memory (EPROM), electrically erasable and programmable read only memory (EEPROM), mask ROM, flash ROM, flash memory, hard drive, or Solid State Drive (SSD) and the present disclosure is not limited thereto. The non-volatile memory 544 may store a plurality of applications (e.g., a first application and a second application). Hereinafter, it is exemplified that the first application and the second application are applications related to a camera service, and the number and kind of a plurality of applications stored at the non-volatile memory 544 are not limited.

Further, the non-volatile memory 544 may store various instructions that may be performed in the processor 530. Such instructions may include a control instruction such as arithmetic and logic calculation, data movement, and input and output that may be recognized by a control circuit and may be defined on a framework stored at the non-volatile memory 544. Further, the non-volatile memory 544 may store at least a portion of the program module 310 of FIG. 3.

The volatile memory 542 may include at least one of a DRAM, SRAM, or SDRAM and the present disclosure is not limited thereto. The processor 530 may load various data such as an application and/or an instruction stored at the non-volatile memory 544 to the volatile memory 542 and perform functions corresponding thereto on the electronic device 500.

According to various example embodiments, calculation and data processing functions which the processor 530 may implement within the electronic device 500 are not limited, but hereinafter a function in which the processor 530 distributes to each application an image that is acquired from the camera module 550 will be described in detail. Operations of the processor 530 to be described later may be performed by loading instructions stored at the memory 540. The processor 530 may include at least a portion of a configuration and/or a function of the processor 120 of FIG. 1 and/or the processor 210 of FIG. 2.

The processor 530 may execute a first application stored at the memory 540. The first application may be an application related to a camera service, and the processor 530 may enable the camera module 550 in response to a camera service request of the first application. Thereafter, the processor 530 may provide at least a portion of at least one image acquired by the camera module 550 to the first application.

As described above, the electronic device 500 may simultaneously execute a first application and a second application related to a camera service. While the processor 530 provides at least a portion of at least one image acquired by the camera module 550 to the first application, the processor 530 may receive a camera service request from the simultaneously or sequentially executed second application. In this case, the processor 530 may distribute at least one image acquired from the first application and the second application. More specifically, the processor 530 may provide a first image and a second image to the first application and the second application, respectively; but it may simultaneously, sequentially, or interleavedly provide a first image and a second image to the first application and the second application, respectively. In other words, while the processor 530 processes a camera service request (or a first request) of the first application, when the processor 530 receives a camera service request (or a second request) of the second application, the processor 530 may process the second request simultaneously, sequentially, or interleavedly with a processing of the first request without finishing processing the first request.

In order to distribute at least one image acquired by the camera module 550 to the first application and the second application, the electronic device 500 may include an image buffer that temporarily stores the at least one image. The image buffer may be provided in one area of the memory 540 (or the volatile memory 542) and may have a fixed address or may have a dynamically allocated address. When at least one image is stored at the image buffer, the processor 530 may provide an address in which each image is stored to the first application and the second application, whereby the first application and the second application may access to the image buffer.

According to various example embodiments, images provided to the first application and the second application may be the same image. In this case, the processor 530 may simultaneously or sequentially store at least one image at the image buffer, copy the at least one image, and provide the at least one image to the first application and the second application.

According to various example embodiments, the first image and the second image provided to the first application and the second application may be different.

According to an example embodiment, the first image may be a first portion of image data acquired by the camera module 550, and the second image may be a second portion of the image data. Here, at least a portion of the first portion and the second portion may be different portions. For example, the first image may be an entire image, and the second image may be an enlarged portion of a portion of the image.

According to an example embodiment, the first image may be formed by forming a first portion of image data with a first rate, and the second image may be formed by forming a second portion of image data with a second rate. Here, the first rate and the second rate may include a resolution and/or a frame rate. That is, the first image and the second image are the same portion or different portions of image data and may be images having different resolutions and/or frame rates. Further, the first image and the second image may be an image in which at least one of a frame order, a compression ratio, brightness, ISO, chroma, color space or focus area is different.

According to an example embodiment, the first image and the second image may be acquired by the first image sensor 552 and the second image sensor 554. In this case, the processor 530 may control the first image sensor 552 based on a first request of a first application and control the second image sensor 554 based on a second request of a second application. According to an example embodiment, the first image sensor 552 may photograph according to a first focus distance to generate a first image, and the second image sensor 554 may photograph according to a second focus distance to generate a second image. According to another example embodiment, the first image and the second image may be images acquired by the first lens 556 and the second lens 558, respectively.

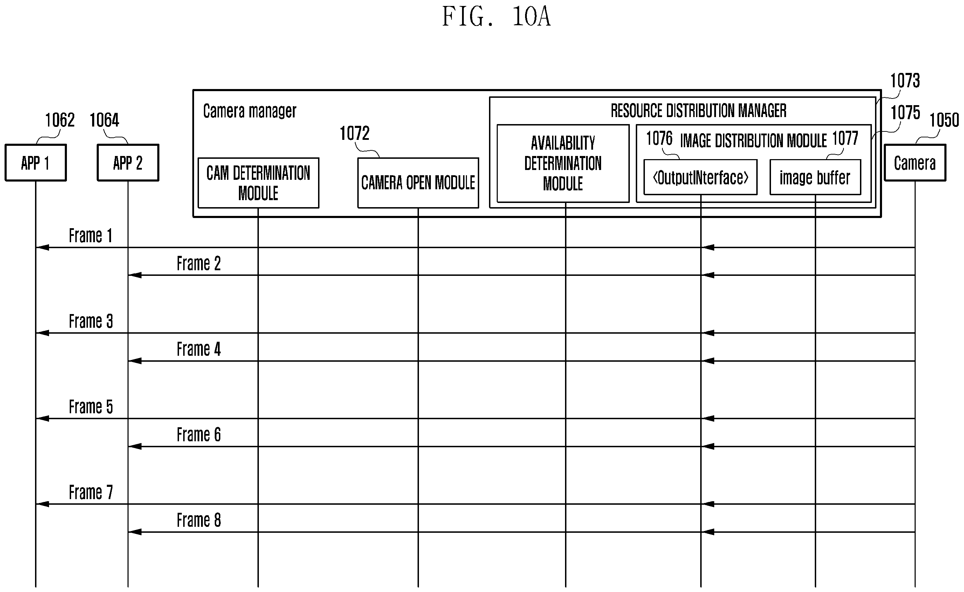

An image distribution method of the processor 530 will be described in detail with reference to FIGS. 10A to 10I.

According to various example embodiments, a camera service request provided from the first application and the second application may be performed through an Application Programming Interface (API) call including an attribute type of an application. Here, an attribute type of an application may be related to usage to use an acquired image in the application. For example, the application may use an image acquired by the image sensor for capture, record, and object recognition. In this case, the camera module 550 and the processor 530 may control an image sensor according to different attribute values according to usage of the acquired image to use in the application and differently determine a resolution, a frame rate, and a focus distance. According to an example embodiment, the camera service request may further include an ID of a camera to acquire an image and output interface information related to a method for access the acquired image. According to an example embodiment, the camera service request may include an ID of a specific image sensor included in the camera module 550.

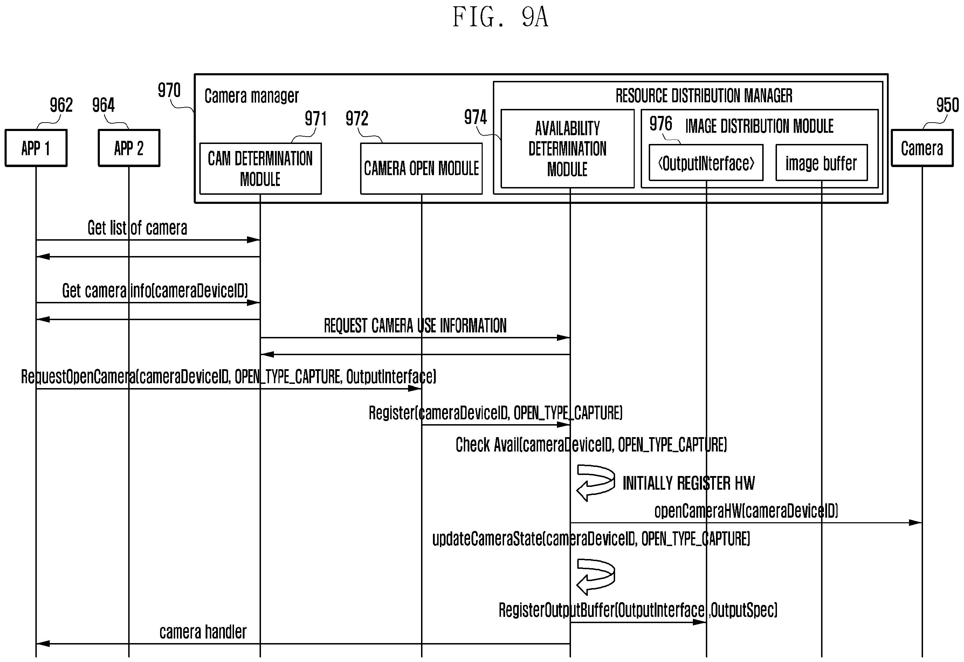

A processing of a camera service request of an application may be performed by instructions defined on a camera manager of a framework. The camera manager may acquire and process an image generated by the camera module 550 and provide the image to the application through an API. According to various example embodiments, the camera manager may include a camera determination module, camera open module, and resource distribution manager, and the resource distribution manager may include an availability determination module and an image distribution module. A detailed function of the camera manager will be described in detail with reference to FIGS. 9A to 9D and FIGS. 10A to 10I.

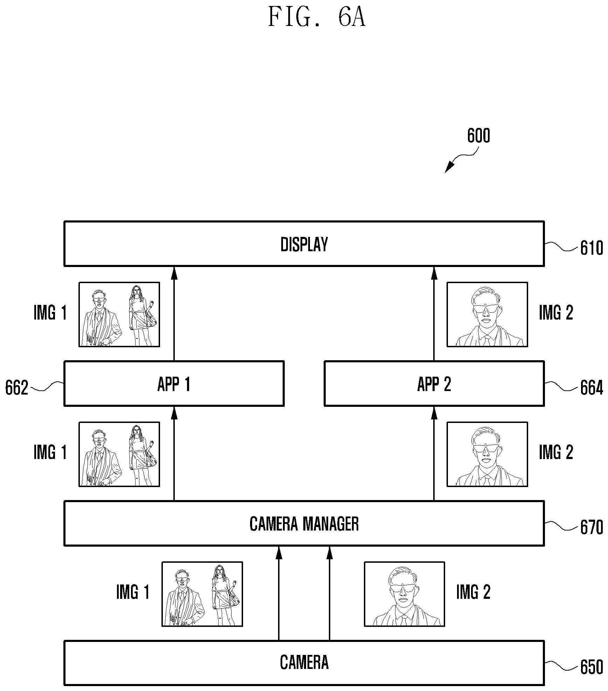

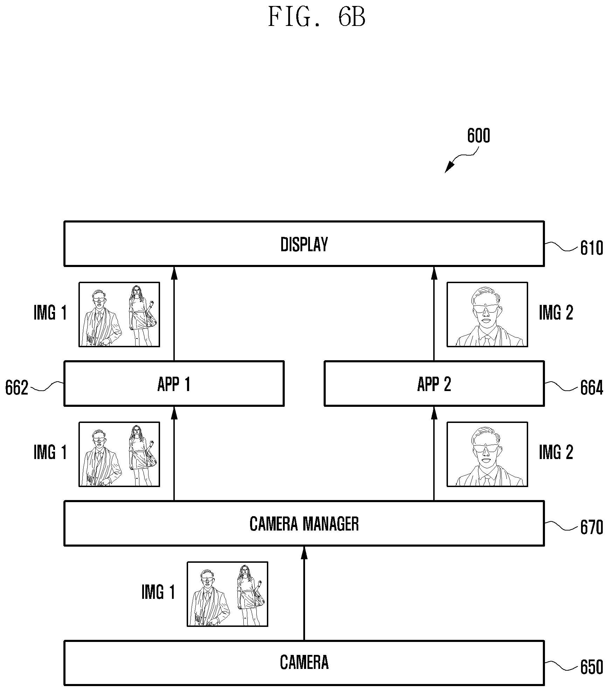

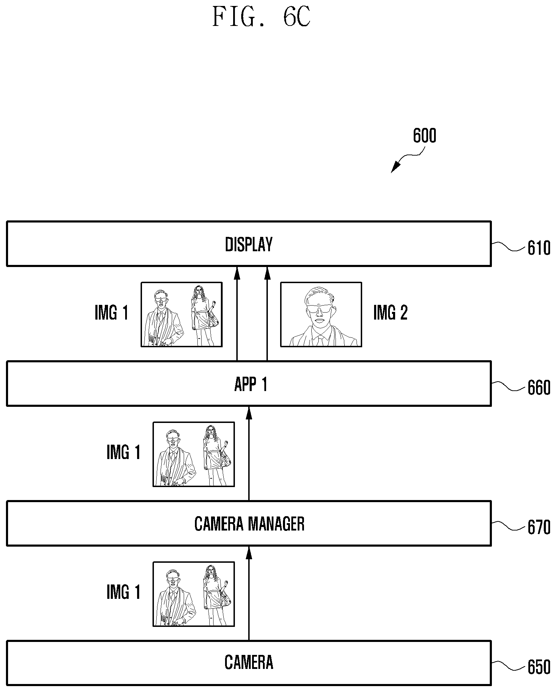

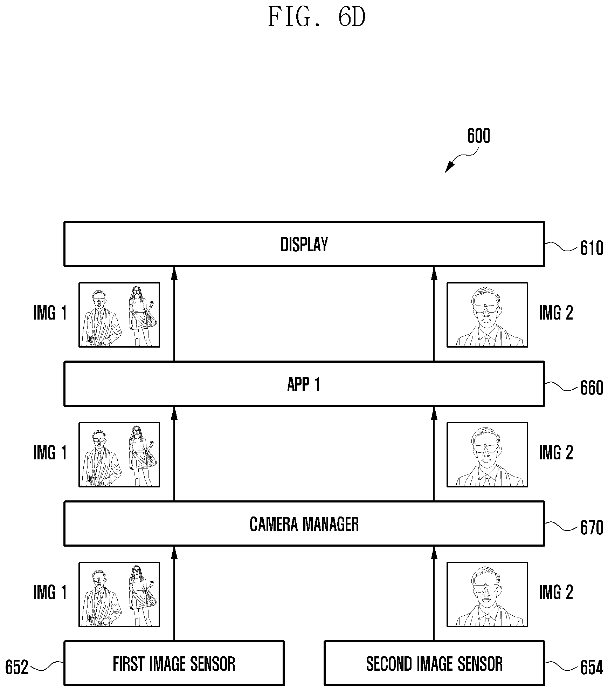

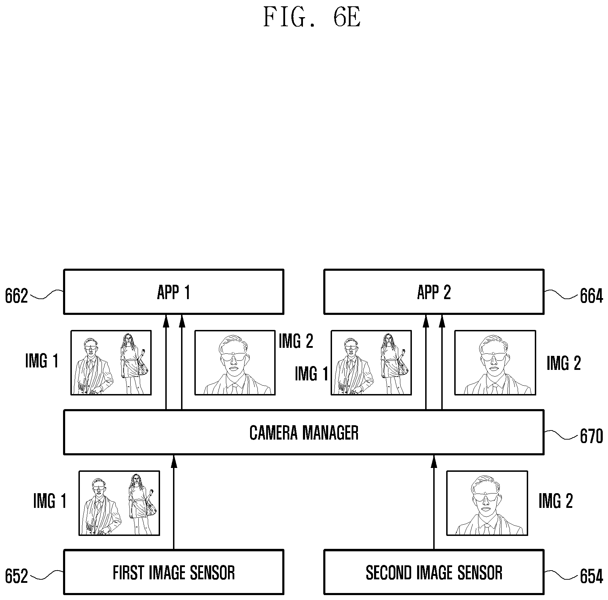

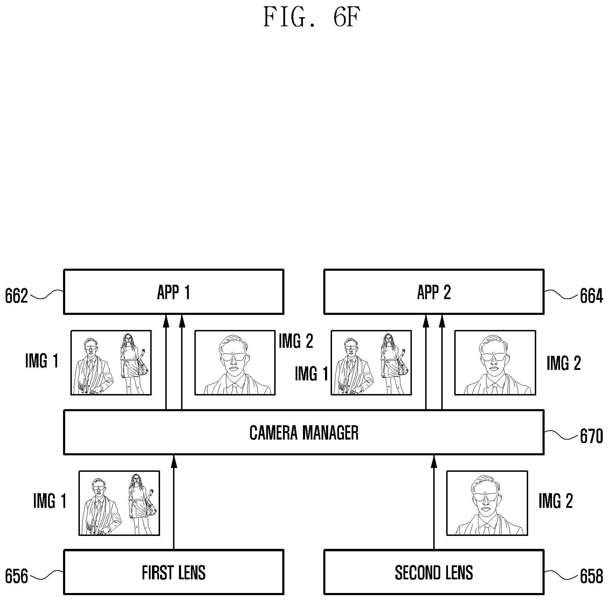

FIGS. 6A, 6B, 6C, 6D, 6E and 6F are diagrams illustrating an example process of providing an image generated in a camera of an electronic device to a display. Hereinafter, an example that photographs a still image and that provides the still image to the first application and the second application is described; the first image illustrates entire image data acquired through the camera module, and the second image illustrates an enlarged partial area of the acquired image data. As described above, the first image and the second image have various forms and are not limited to a form described hereinafter.

FIG. 6A illustrates an example embodiment that acquires an image using one image sensor and that provides an image to the first application 662 and the second application 664.

With reference to FIG. 6A, a camera module 650 may acquire one image data in response to a camera service request of the first application 662 and the second application 664.

The acquired image data may be temporarily stored at a buffer (not shown) provided within the camera module 650, and the camera module 650 may generate each of a first image IMG 1 and a second image IMG2 from image data by an image processing module (not shown) provided at the inside.

The camera module 650 may provide the first image and the second image to a camera manager 670.

The camera manager (e.g., including various circuitry and/or program elements) 670 may provide the first image to the first application 662 through an API and provide the second image to the second application 664.

The first image and the second image may be processed by the first application 662 and the second application 664 and at least a portion thereof may be simultaneously displayed on a display 610.

FIG. 6B illustrates an example embodiment that acquires an image using one image sensor and that provides the image to the first application 662 and the second application 664.

With reference to FIG. 6B, the camera module 650 may acquire one image data in response to a camera service request of the first application 662 and the second application 664 and provide the acquired image data to the camera manager 670. Here, the image data acquired by the camera module 650 may be the same as the first image.

The camera manager 670 may store the received image data on the image buffer and generate a first image and a second image from the image data.

The camera manager 670 may provide the first image generated through the API to the first application 662 and provide the second image to the second application 664.

FIG. 6C illustrates an example embodiment that acquires an image using one image sensor and that generates a first image and a second image in one application.

With reference to FIG. 6C, the camera module 650 may acquire one image data in response to a camera service request of the application 660 and provide the acquired image data to the camera manager 670.

The camera manager 670 may provide a first image generated through the API to the application 660.

The application 660 may generate a second image from the first image and display the first image and the second image through the display 610.

FIG. 6D illustrates an example embodiment that acquires an image using a first image sensor 652 and a second image sensor 654 and that processes and displays a first image and a second image in an application 660.

With reference to FIG. 6D, the camera module 650 may include a first image sensor 652 and a second image sensor 654, the first image sensor 652 may acquire a first image, and the second image sensor 654 may acquire a second image. The camera module 650 may provide the acquired first image and second image to the camera manager 670.

The camera manager 670 may provide the first image and the second image to the application 660 requested through an API call. The application 660 may process the received first image and second image to display the received first image and second image on the display 610.

FIG. 6E illustrates an example embodiment that acquires an image using the first image sensor 652 and the second image sensor 654 and in which the first application 662 and the second application 664 process and display a first image and a second image, respectively.

With reference to FIG. 6E, the camera module 650 includes a first image sensor 652 and a second image sensor 654, and the first image sensor 652 may acquire a first image and the second image sensor 654 may acquire a second image. The camera module 650 may provide the acquired first image and second image to the camera manager 670.

The camera manager 670 may provide a first image and a second image to the first application 662 and provide a first image and a second image to the second application 664.

According to an example embodiment, the camera manager 670 may process and add the first image and the second image and generate the entire or a portion of the added image into a third image and a fourth image. The camera manager 670 may provide the third image and the fourth image to the first application 662 and the second application 664, respectively.

FIGS. 6A to 6E correspond to various example embodiments of the present disclosure, the number of applications and the number of image sensors that can use a camera function are not limited, and a method of generating a plurality of images from an image acquired by the camera module may be various.

Further, according to an example embodiment, the electronic device 600 may acquire an image from each of a plurality of lenses. As illustrated in FIG. 6F, the camera module 650 may include a first lens 656 and a second lens 658; the first lens 656 may acquire a first image, and the second lens 658 may acquire a second image. The acquired first image and second image may be provided to the camera manager 670. The camera manager 670 may provide a first image and a second image to the first application 662 and provide a first image and a second image to the second application 664. In addition to FIG. 6F, various example embodiments that acquire an image from each of a plurality of lenses and that transmit the image to a camera manager may exist.

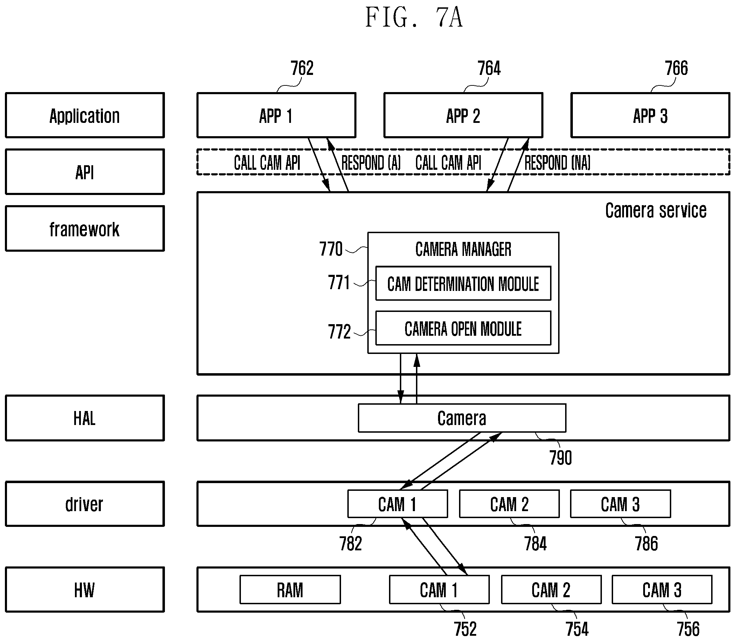

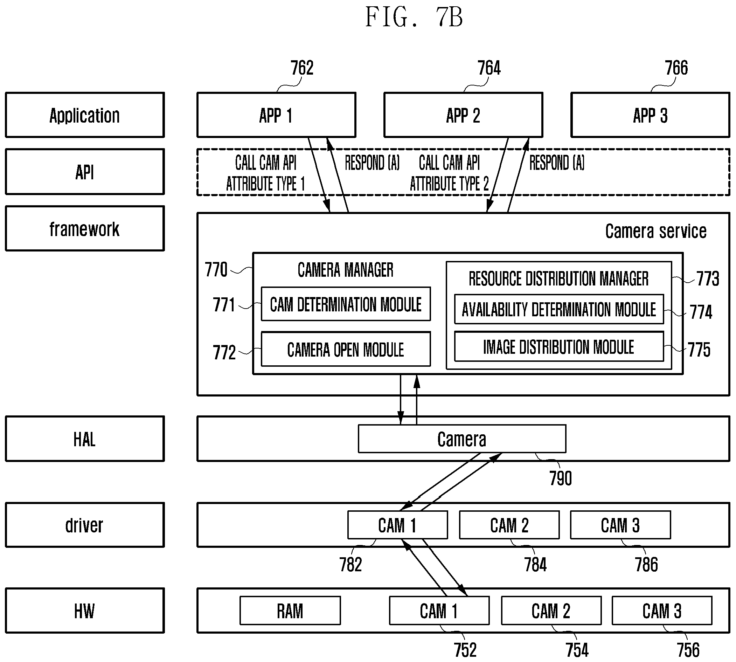

FIGS. 7A and 7B are diagrams illustrating an example process of providing an image generated in a camera of an electronic device to an application.

FIGS. 7A and 7B illustrate a process of providing image data to an application in each hardware and software layer and may include hardware, a driver, Hardware Abstraction Layer (HAL), framework, Application Programming Interface (API), and application.

With reference to FIGS. 7A and 7B, a camera module of the electronic device may include first to third image sensors 752, 754, and 756 and first to third drivers 782, 784, and 786 for driving each image sensor. The framework may include a camera manager 770, and the camera manager 770 may include a camera determination module 771 for determining a list of the image sensor (e.g., 752, 754, and 756) included in the electronic device and an attribute of each image sensor and a camera open module 772 for enabling at least one image sensor according to a request of an application (e.g., 762, 764, and 766).

FIG. 7A illustrates a comparison example of various example embodiments of the present disclosure. Contents described with reference to FIG. 7A are for obtaining various example embodiments of the present disclosure to be described hereinafter and are not regarded as the conventional art.

After the first application 762 is executed, a camera service may be requested through an API call. The camera service may be transferred to the framework through the API, and the camera manager 770 may request image acquisition to the first image sensor 752 via a HAL 790 and the first driver 782. The image acquired by the first image sensor 752 may be transmitted to the first application 762 via the first driver 782, the HAL 790, and the camera manager 770.

While image data of the first image sensor 752 are transmitted to the first application 762, a camera service request may be received from the second application 764. According to a comparison example of FIG. 7A, because the first application 762 occupies an image acquisition function of the first image sensor 752, the camera manager 770 may transmit a response message NA notifying that access is not approved for an API call of the second application 764.

That is, according to a comparison example of FIG. 7A, only one application (e.g., 762) may access to a camera resource (e.g., 752), and the first application 762 and the second application 764 cannot simultaneously occupy a camera service.

According to an example embodiment of FIG. 7B, unlike FIG. 7A, the camera manager 770 may simultaneously process a camera service request of the first application 762 and the second application 764. For this reason, the camera manager 770 may further include a resource distribution manager 773, and the resource distribution manager 773 may include an availability determination module 774 and an image distribution module 775.

The first application 762 and the second application 764 may request a camera service through an API call including an attribute type of an application. Here, an attribute type of an application may be related to usage of an acquired image to use (e.g., still image capture, moving picture record, object recognize) in an application. The first application 762 and/or the second application 764 may together request at least one attribute type. For example, the first application 762 and/or the second application 764 may simultaneously perform picture photographing and moving picture record, and in this case, the first application 762 and/or the second application 764 may include attribute types of picture photographing and moving picture record. According to an example embodiment, an attribute type may directly designate an image resolution, a compression quality, and a frame rate or may use a value included in an output interface.

While an image acquired by a first image sensor (or a first lens) is provided to the first application 762, when a camera API call is received from the second application 764, the availability determination module 774 may determine a resource of a camera module and a memory and determine whether an image may be provided to the second application 764. If an image may be provided to the second application 764, the image distribution module 775 may distribute an image acquired through at least one distribution method. According to an example embodiment, an image provided to the first application 762 and the second application 764 may be stored at a separate buffer memory.

The availability determination module 774 may determine an available resource based on a camera module and an attribute type and determine an available resource in consideration of a previously defined maximum value based on each configuration of the electronic device, for example a performance of a CPU, volatile memory, non-volatile memory, and camera module. The availability determination module 774 may have algorithm and/or a function of determining availability according to a performance of each configuration of the electronic device. When using a use object, which is one of the attributes as an attribute type, a resolution, compression quality, and frame rate provided according to each object may be previously defined. According to an example embodiment, it may be determined whether a response is available by comparing a previously defined maximum value using a table/arrangement/function and a currently required numerical value. The availability determination module 774 may determine a current operation state value of the camera module and respond whether a requested operation is available through an attribute type in the application. The availability determination module 774 may store a setup value or a state value of the camera according to a request of an application.

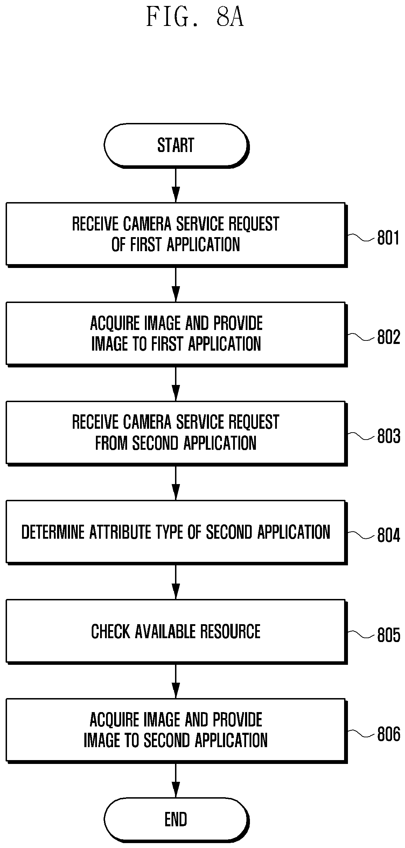

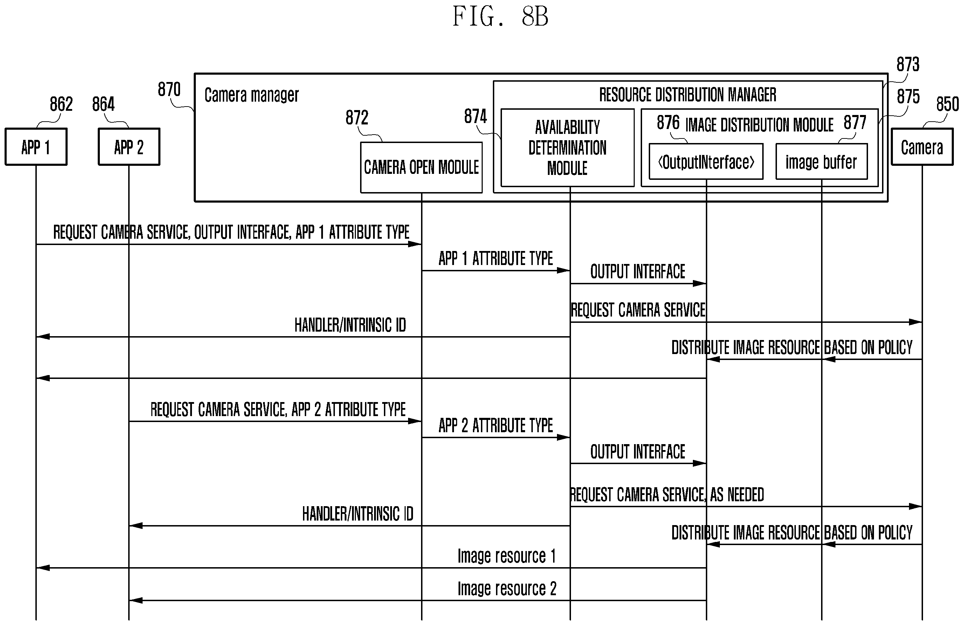

A more detailed operation of the availability determination module 774 and the image distribution module 775 will be described in greater detail below with reference to FIGS. 8 to 10.

FIG. 8A is a flowchart illustrating an example method of providing an image in an electronic device according to various example embodiments of the present disclosure.

The processor (e.g., the processor 530 of FIG. 5) of the electronic device may receive a camera service request of a first application at operation 801.

The processor may provide an image acquired by the camera module to the first application at operation 802 in response to a camera service request of the first application.

While the processor provides an image to the first application, the processor may receive a camera service request from a second application at operation 803. The camera service request may be performed through an API call including an attribute type of an application.

The processor may determine an attribute type of the second application included in a camera service request of the second application at operation 804.

The processor may check an available resource of each configuration, such as the camera module and a memory of the electronic device, at operation 805.

As a check result of the resource, when the resource is sufficient, the processor may provide an image acquired by the camera module to the second application at operation 806. Alternatively, when the resource is not sufficient, the processor may transmit an error message and may not provide an image.

FIG. 8B is a message flow diagram illustrating an example image distribution method according to various example embodiments of the present disclosure.

As illustrated in FIG. 8B, the electronic device (e.g., the electronic device 500 of FIG. 5) may include a plurality of applications (e.g., a first application 862 and a second application 864) and a camera manager 870. As described above, the camera manager 870 may be defined on a framework, and the processor (e.g., the processor 530 of FIG. 5) may load instructions constituting the camera manager 870 on a memory (e.g., the memory 540 or the volatile memory 542 of FIG. 5) to perform a function of the camera manager 870. FIG. 8B illustrates that the electronic device includes only one image sensor (or camera), but various example embodiments of the present disclosure are not limited thereto.

A camera service request of the first application 862 may be provided to the camera open module 872. Here, the camera service request may be performed through an API call and may include an attribute type of the first application 862 and output interface information for providing an acquired image to the first application 862. The camera open module 872 may provide an attribute type of the first application 862 to an availability determination module 874, and an image distribution module 875 may receive output interface information.

According to an example embodiment, the electronic device may store an attribute table including an attribute type of each installed application, and a resource distribution manager 873 may determine an attribute type of the application based on an index of the application. In this case, when a camera service is requested, the application may provide only index information instead of transmitting an attribute type.

The availability determination module 874 may determine a current resource of a camera module 850 and the memory; and, when an image may be provided to the first application 862, the availability determination module 874 may request a camera service to the camera module 850. Further, the availability determination module 874 may at least partially simultaneously provide an intrinsic ID of an image sensor to provide an image and a handler that can control the camera module 850 to the first application 862.

The image acquired by the camera module may be temporarily stored at an image buffer 877 and may be provided to the first application 862 through an output interface 876. According to an example embodiment, the image buffer 877 may be allocated to a separate area within the memory on each application basis.

While providing an acquired image to the first application 862, the second application 864 may at least partially simultaneously transmit a camera service request to the camera manager 870. Here, a camera service request of the second application 864 may include an attribute type of the second application 864 and information of the output interface 876 for providing an acquired image to the second application 864.

The camera open module 872 may provide an attribute type of the second application 864 to the availability determination module 874, and the image distribution module 875 may receive information of the output interface 876.

The availability determination module 874 may determine a current resource of the camera module 850 and the memory; and, when an image may be provided to the second application 864, the availability determination module 874 may request a camera service to the camera module 850. Further, the availability determination module 874 may at least partially simultaneously provide an intrinsic ID of an image sensor to provide an image and a handler that can control the camera module to the second application 864.

Accordingly, a first image may be provided to the first application 862 through the output interface 876, and a second image may be provided to the second application 864.

When an image cannot be provided to the second application 864 because of shortage of a current resource of the camera module and/or the memory, the availability determination module 874 may transmit a response message notifying that access of the second application 864 may not be approved.

FIGS. 9A to 9D are message flow diagrams illustrating a process in which each application requests to transmit an image to a camera according to various example embodiments of the present disclosure.

FIG. 9A is a diagram illustrating an example initial registering process of a first application 962.

The first application 962 may request a list of cameras provided in the electronic device operated by a camera manager 970 to the camera manager 970 through an API, and a camera determination module 971 may transmit a list of cameras provided in the electronic device to the first application 962 based on previously stored camera information (Get list of camera).

When the camera list is determined, the first application 962 may transmit a camera information request message including identification information of the camera (Get camera info (cameraDeviceID)), and the camera determination module 971 may request use information of the corresponding camera to an availability determination module 974.

The availability determination module 974 may determine a resource of the camera and the memory; and, when the camera and the memory are available, the availability determination module 974 may provide a response message to the first application 962 through the camera determination module 971.

The first application 962 may transmit a camera open request message to a camera open module 972 (RequestOpenCamera(cameraDeviceID, OPEN_TYPE_CAPTURE, OutputInterface)). Here, the camera open request message may include a camera ID, an attribute type of the first application 962, and output interface information for providing an acquired image to the first application 962. As described above, the attribute type of the first application 962 includes information about usage to use an acquired image in the first application 962; and, as shown in FIG. 9A, the first application 962 may include that an attribute type is capture (OPEN_TYPE_CAPTURE) and may transmit the attribute type to the camera open module 972. Output interface information may be a memory allocated for an image to be acquired by the camera, a memory pointer, an object or a function pointer including the memory and the memory pointer, or an interface class object.

The camera open module 972 may transmit a registration request message of the first application 962 to the availability determination module 974 based on a received camera open request message (Register (cameraDeviceID, OPEN_TYPE_CAPTURE)).

The availability determination module 974 determines whether a camera requested by the first application 962 may acquire an image of capture usage; and, if a camera requested by the first application 962 may acquire an image of capture usage, the availability determination module 974 may register the first application 962. Further, the availability determination module 974 may include a camera ID in the camera module 950 and request to open camera hardware.

Thereafter, the availability determination module 974 may update a camera status including a camera ID, and an attribute type of the application periodically or when a predetermined event occurs (updateCameraState (cameraDeviceID, OPEN_TYPE_CAPTURE)).

The availability determination module 974 may register an output interface and an output spec requested by the first application 962 (RegisterOutputBuffer (OutputInterface, OutputSpec)). Here, the output spec is attribute information of a camera 950 and may include a resolution and a frame rate of an image which the camera 950 is to acquire.

Further, the availability determination module 974 may transmit a handler that can control a camera to the first application 962.

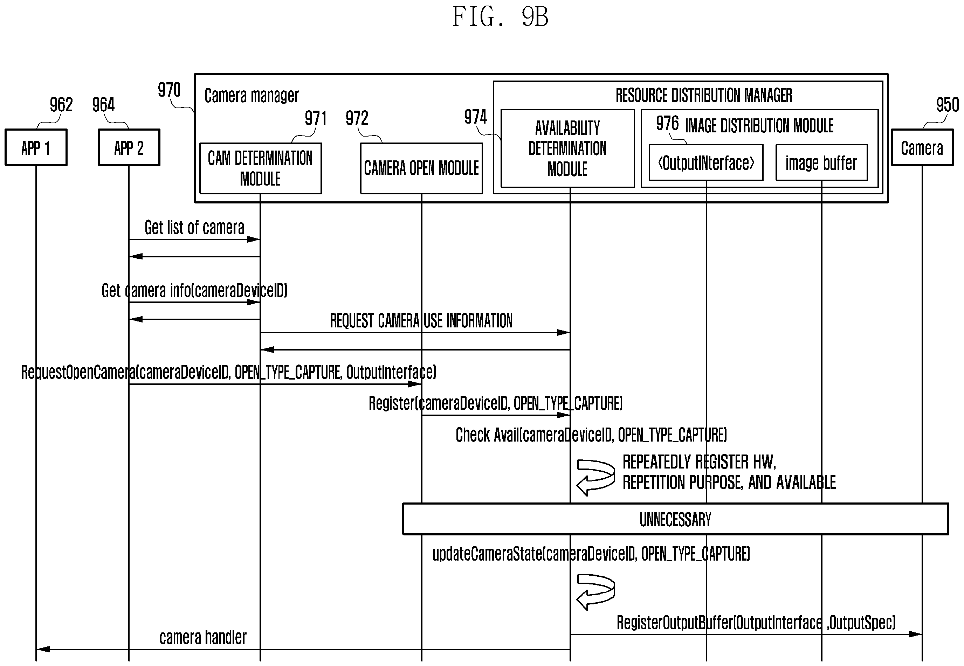

FIG. 9B illustrates a process of registering the second application 964 while the first application 962 is being driven on the screen. FIG. 9B illustrates a process after registering the first application 962 of FIG. 9A and illustrates an example embodiment in which the second application 964 uses a camera service with the same object (e.g., capture) as that of the first application 962.

A process in which the second application 964 acquires a camera list through the camera determination module 971 (Get list of camera) and acquires camera information (Get camera info (cameraDeviceID)) and an operation in which the second application 964 requests camera use information to the availability determination module 974 may be the same as a description of FIG. 9A.

The second application 964 may transmit a camera open request message to the camera open module 972 (RequestOpenCamera (cameraDeviceID, OPEN_TYPE_CAPTURE, OutputInterface)). Here, the camera open request message may include a camera ID, an attribute type of the second application 964, and output interface information for providing an acquired image to the second application 964. As illustrated in FIG. 9B, the second application 964 may include and transmit to the camera open module 972 that an attribute type is capture (OPEN_TYPE_CAPTURE).

The camera open module 972 may transmit a registration request message of the second application 964 to the availability determination module 974 based on the received camera open request message (Register (cameraDeviceID, OPEN_TYPE_CAPTURE)).

The availability determination module 974 may determine whether a camera requested by the second application 964 may acquire an image of capture usage; and, if a camera requested by the second application 964 may acquire an image of capture usage, the availability determination module 974 may register the second application 964.

In the present example embodiment, attribute types of the first application 962 and the second application 964 may be the same as capture. In this case, the camera may acquire an image with the same attribute (e.g., resolution, frame rate) and provide the image to the first application 962 and the second application 964. Accordingly, a process of requesting to open camera hardware according to a request of the second application 964 is not required, and the camera 950 may continuously acquire an image according to an output spec requested by the first application 962.

The availability determination module 974 may register an output interface 976 and an output spec requested by the second application 964 (RegisterOutputBuffer (OutputInterface, OutputSpec)).

Further, the availability determination module 974 may transmit a handler in which the second application 964 may control a camera to the second application 964.

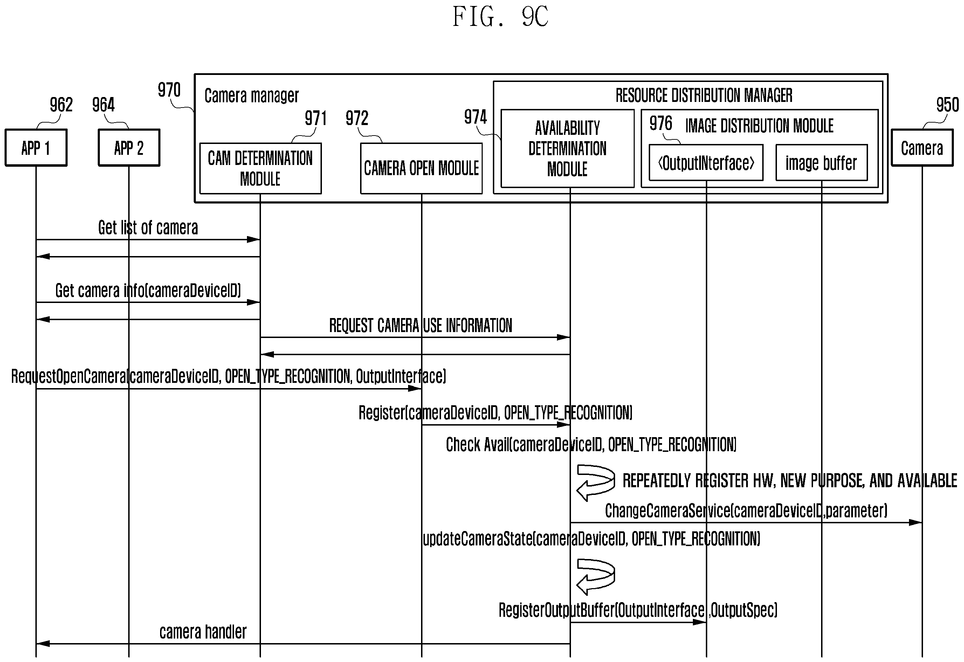

FIG. 9C is a message flow diagram illustrating a registering process of the second application 964 while the first application 962 is being driven on the screen. FIG. 9C is a diagram illustrating a process after registering the first application 962 of FIG. 9A; and, unlike FIG. 9B, FIG. 9C is a diagram illustrating an example embodiment in which the second application 964 uses a camera service with an object (e.g., object recognition) different from the first application 962.

A process in which the second application 964 acquires a camera list through the camera determination module 971 (Get list of camera) and acquires camera information (Get camera info (cameraDeviceID)) and an operation in which the second application 964 requests camera use information to the availability determination module 974 may be the same as a description of FIGS. 9A and 9B.

The second application 964 may transmit a camera open request message to the camera open module 972 (RequestOpenCamera (cameraDeviceID, OPEN_TYPE_RECOGNITION, OutputInterface)). Here, the camera open request message may include a camera ID, an attribute type of the second application 964, and output interface information for providing an acquired image to the second application 964. As shown in FIG. 9C, the second application 964 may include that an attribute type is object recognition (OPEN_TYPE_RECOGNITION) and transmit the attribute type to the camera open module 972.

The camera open module 972 may transmit a registration request message of the second application 964 to the availability determination module 974 based on a received camera open request message (Register (cameraDeviceID, OPEN_TYPE_RECOGNITION)).

The availability determination module 974 may determine whether a camera requested by the second application 964 may acquire an image of object recognition usage; and, when a camera requested by the second application 964 may acquire an image of object recognition usage, the availability determination module 974 may register the second application 964.

When an attribute type (object recognition) different from an attribute type (capture) of the first application 962 is transmitted from the second application 964, the availability determination module 974 may request a change of a camera service. In this case, the change request message may include a camera ID and a parameter for a service (object recognition) to be changed (ChangeCameraService cameraDeviceID, parameter)). For image capture, in order to photograph at an accurate timing, it is necessary to operate with a high frame rate (e.g., 60 frame/sec); but for object recognition, it may be operated with a lower frame rate (e.g., 10 frame/sec). Further, for object recognition, the object may be photographed with a resolution lower than that of image capture.

Therefore, the availability determination module 974 may transmit a parameter of a camera attribute to be changed to the camera according to an attribute type of the second application 964.

According to an example embodiment, when attribute types of the first application 962 and the second application 964 are different, the availability determination module 974 may request the camera to acquire an image with a higher parameter (e.g., resolution and frame rate) among attribute types. For example, when image capture of a high resolution and image capture of a low resolution are transmitted from the first application 962 and the second application 964, respectively, the availability determination module 974 may request to the camera to acquire a high resolution image. In this case, an image processing module (not shown) of the camera manager 970 may convert a high resolution image to a low resolution image and provide the low resolution image to the second application 964.

Thereafter, the availability determination module 974 may update a camera status including a camera ID and an attribute type of an application periodically or when a predetermined event occurs (updateCameraState (cameraDeviceID, OPEN_TYPE_CAPTURE)).

The availability determination module 974 may register an output interface 976 and an output spec requested by the second application 964 (RegisterOutputBuffer (OutputInterface, OutputSpec)). Here, the output spec is attribute information of the camera and may include a resolution and a frame rate of an image to be acquired by the camera.

Further, the availability determination module 974 may transmit a handler that can control a camera to the second application 964.

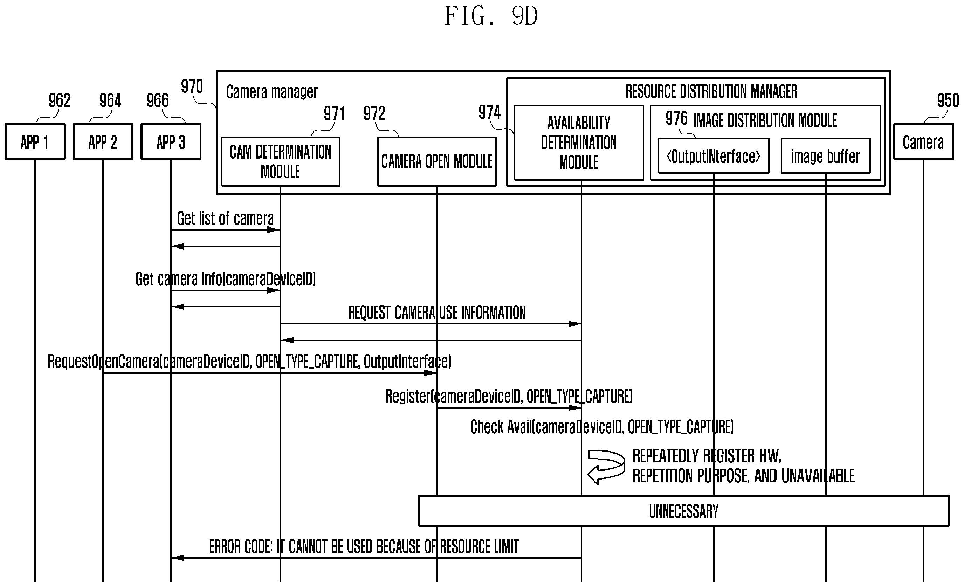

FIG. 9D is a message flow diagram illustrating a registration process of a third application 966 while the first application 962 and the second application 964 are being driven on the screen. FIG. 9D is a diagram illustrating a process after registering the second application 964 of FIG. 9B or 9C.

A process in which the third application 966 may acquire a camera list through the camera determination module 971 (Get list of camera) and acquires camera information (Get camera info (cameraDeviceID)) and an operation in which the third application 966 requests camera use information to the availability determination module 974 may be the same as that described in FIGS. 9A to 9C.

The third application 966 may transmit a camera open request message to the camera open module 972 (RequestOpenCamera (cameraDeviceID, OPEN_TYPE_CAPTURE, and OutputInterface)). Here, the camera open request message may include a camera ID, an attribute type of the third application 966, and output interface information for providing an acquired image to the third application 966. As shown in FIG. 9C, the third application 966 may include and transmit to the camera open module 972 that an attribute type is capture (OPEN_TYPE_CAPTURE).

The camera open module 972 may transmit a registration request message of the third application 966 to the availability determination module 974 based on a received camera open request message (Register (cameraDeviceID, OPEN_TYPE_CAPTURE).

The availability determination module 974 may determine whether a camera requested by the third application 966 may acquire an image of capture usage. In this case, camera hardware is the same as already registered hardware and an object (capture) thereof is the same, but it may be determined that the camera hardware cannot be used because of a limit of the camera module 950 or a memory resource. In this case, the availability determination module 974 may transmit an error code to the third application 966.

According to another example embodiment, the availability determination module 974 may limit the number (e.g., two) of applications that may simultaneously access to the camera 950; and, when the number (e.g., two) of applications is exceeded, the availability determination module 974 may block access of an application that requests a camera service.

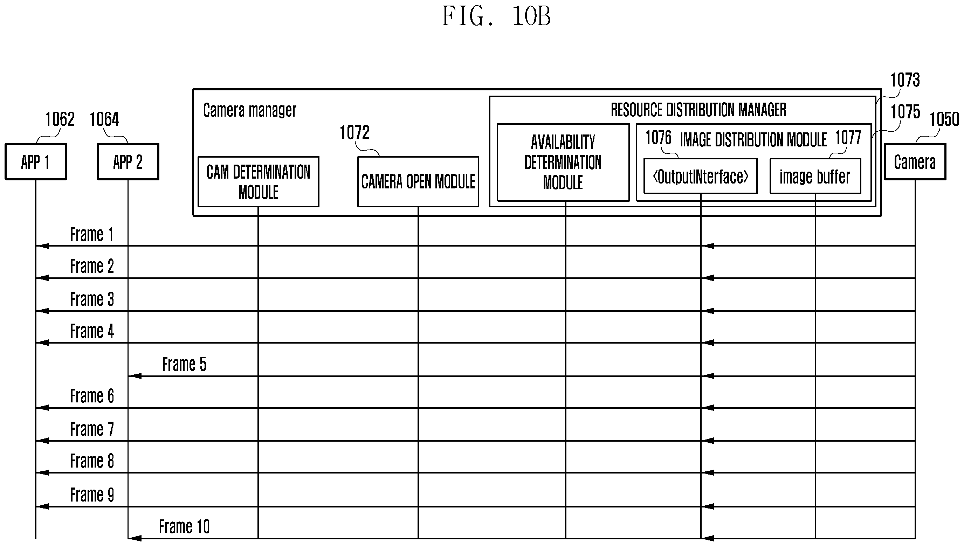

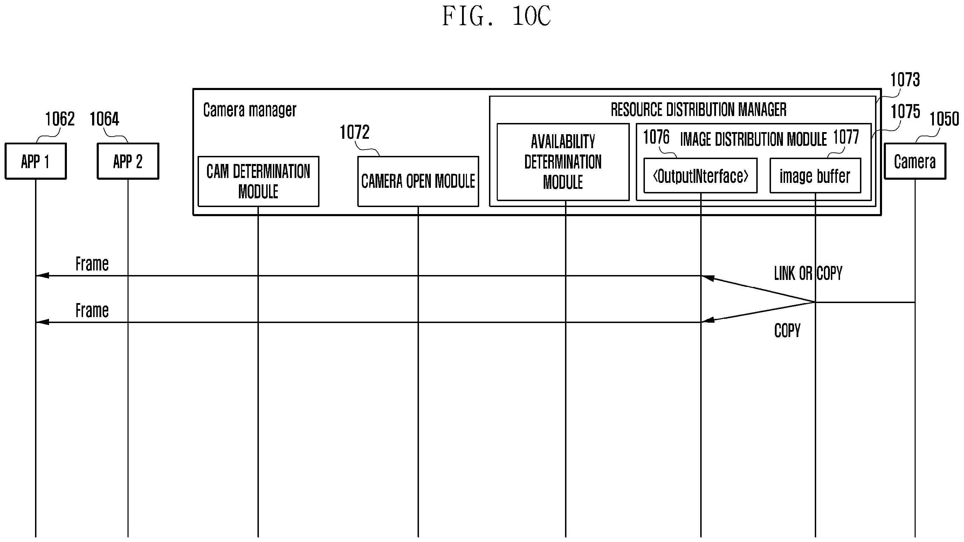

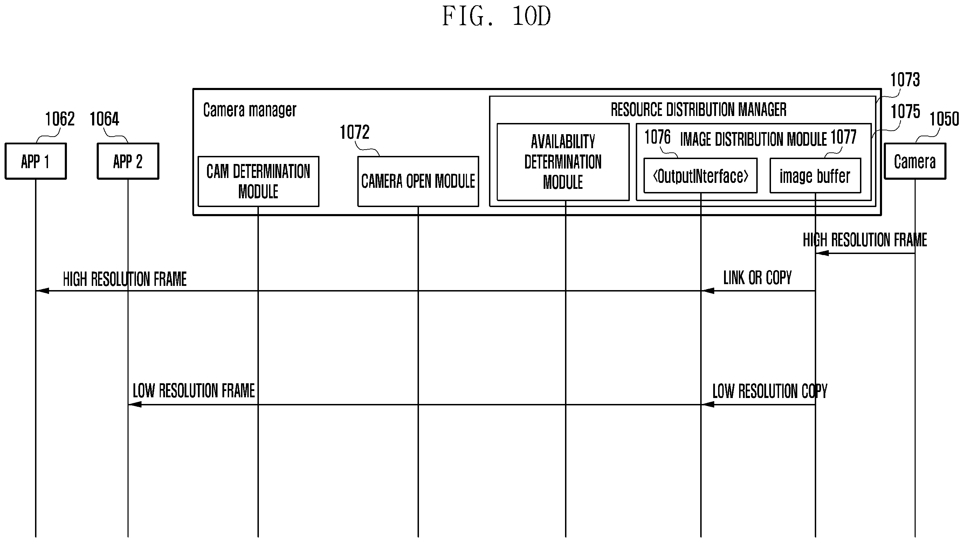

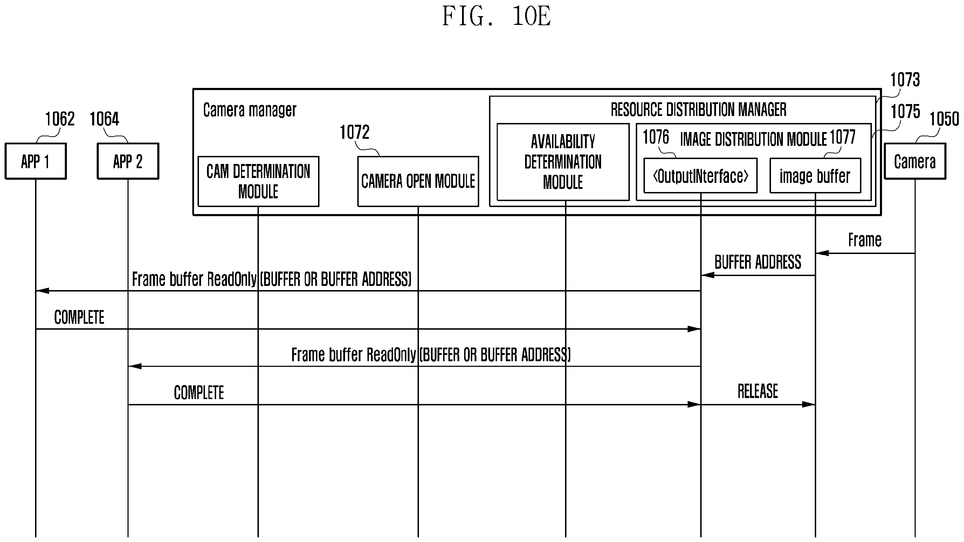

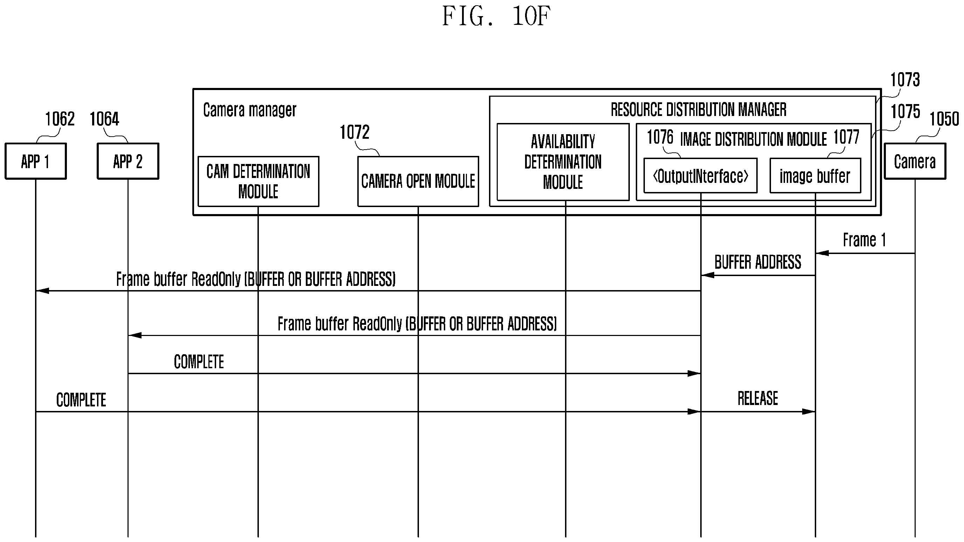

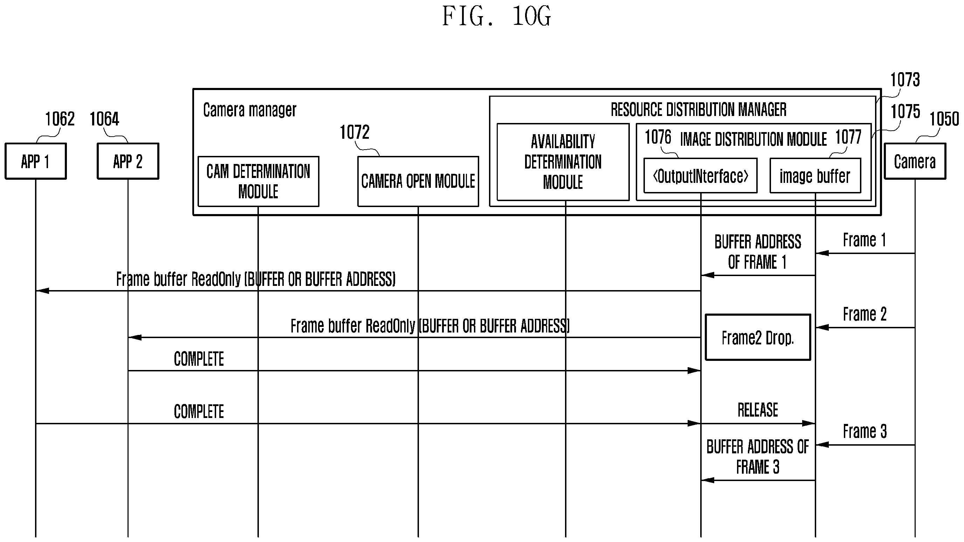

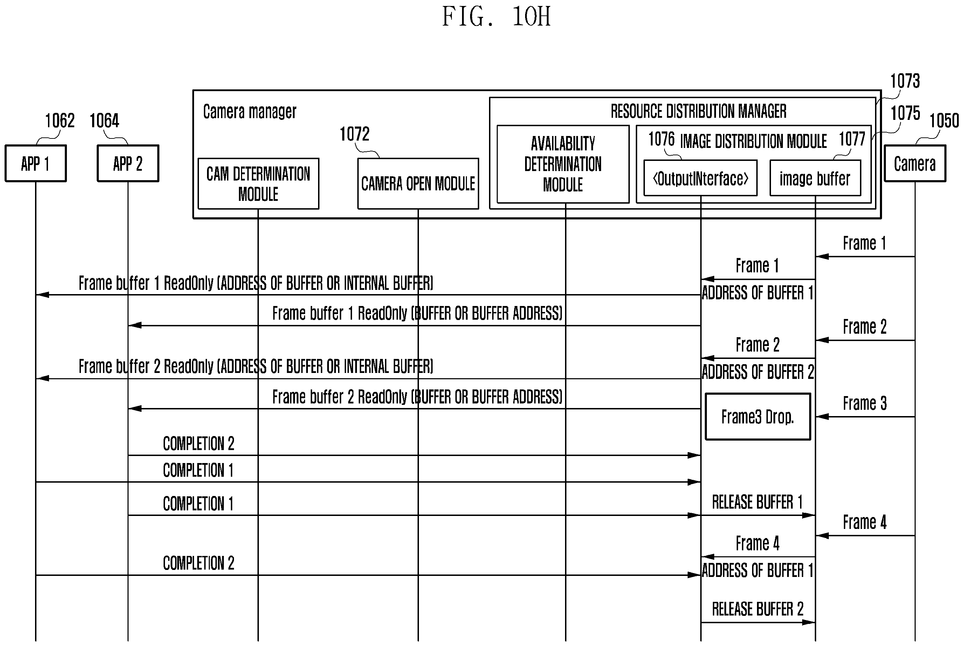

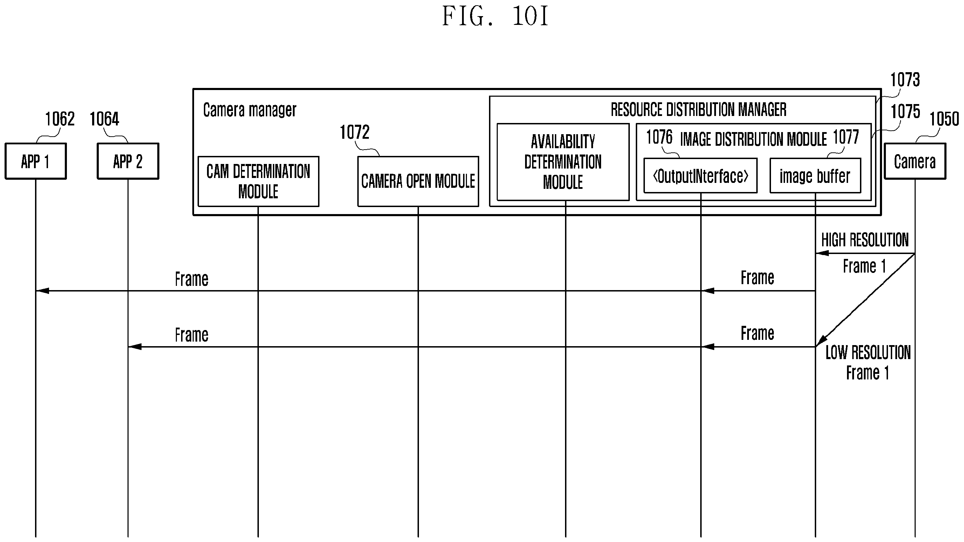

FIGS. 10A, 10B, 10C, 10D, 10E, 10F, 10G, 10H and 10I are message flow diagrams illustrating an example method of distributing an image generated in a camera to each application according to various example embodiments of the present disclosure.

As described above, the electronic device may distribute at least one image acquired by a camera module 1050 to a first application 1062 and a second application 1064 through at least one distribution method.

FIGS. 10A and 10B are diagrams illustrating an example embodiment that intersects and provides an image acquired by a camera on a frame.

According to an example embodiment, the camera may intersect sequentially acquired image frames (e.g., frame 1 to frame 8) to transmit the image frames to each of the first application 1062 and the second application 1064.

As illustrated in FIG. 10A, odd numbered image frames may be provided to the first application 1062, and even numbered image frames may be provided to the second application 1064. According to an example embodiment, the first application 1062 and the second application 1064 may request an image for the same attribute type, for example capture usage. In this way, when the first application 1062 and the second application 1064 have the same attribute type, an image acquired by the camera may be transmitted to the first application 1062 and the second application 1064 with the same frame rate.

According to another example embodiment, as illustrated in FIG. 10B, the camera may distribute an image with a method of providing a plurality of frames (e.g., frame 1 to frame 4) of sequentially acquired image frames to the first application 1062 and providing one frame (e.g., frame 5) to the second application 1064.

According to an example embodiment, the first application 1062 and the second application 1064 may have different attribute types, and the first application 1062 may request image capture and the second application 1064 may request object recognition, i.e., an image of different frame rates may be required. In this case, the camera may acquire an image with 60 frame/sec; and 48 frames per second may be provided to the first application 1062 that requires a higher frame rate, and 12 frames per second may be provided to the second application 1064 for which the frame rate is sufficient even with a lower frame rate.

In an example embodiment of FIGS. 10A and 10B, because an image acquired by the camera may be temporally divided in a frame unit to be transmitted to the first application 1062 and to the second application 1064, the image acquired by the camera may be provided from the camera 1050 to the first application 1062 and the second application 1064 through an output interface 1076 without any necessity to store separately at an image buffer 1077. According to an example embodiment, an image distribution module 1075 may copy an acquired image to an area of a memory in which each application is loaded or may store an image at another area of the memory, and provide an address of the stored area to each application.

FIGS 10C and 10D are message flow diagrams illustrating an example embodiment that copies and provides an image acquired by a camera.

As shown in FIG. 10C, at least one image acquired by the camera 1050 may be stored at the image buffer 1077. The image distribution module 1075 may provide an address in which an image acquired on the image buffer 1077 is stored to the output interface 1076 of the first application 1062 and the second application 1064 or may copy the acquired image and provide the acquired image to each of the first application 1062 and the second application 1064.

In this case, a physical memory area of the output interface 1076 and a physical memory area of the image buffer 1077 in which an acquired image is temporarily stored may be the same.

As shown in FIG. 10D, the first application 1062 and the second application 1064 may request different attribute types; and, for example, the first application 1062 may request capture of a high resolution image, and the second application 1064 may request capture of a low resolution image. The camera open module 1072 may drive the camera 1050 in a high resolution to acquire a high resolution image in response to such a camera service request.

The acquired high resolution image may be stored at one area of the image buffer 1077 and may be provided through the output interface 1076 of the first application 1062.

Further, the image distribution module 1075 may copy the acquired high resolution image to a low resolution image and provide the copied image through the output interface 1076 of the second application 1064. According to an example embodiment, the image distribution module 1075 may further include an image processing module (not shown) that can change a characteristic (e.g., resolution, frame rate) of an image stored at the image buffer 1077 such as conversion of a high resolution image to a low resolution image according to a request of an application.

FIGS. 10E and 10F illustrate a method in which the first application 1062 and the second application 1064 access to an image acquired by the camera 1050.

According to an example embodiment, an image acquired by the camera 1050 may be stored at the image buffer 1077, and address information of an area in which an image is stored may be provided to the first application 1062 and the second application 1064. By accessing to the image buffer 1077 according to received address information, the first application 1062 and the second application 1064 may acquire an image.

According to an example embodiment, as shown in FIG. 10E, the first application 1062 and the second application 1064 may sequentially access to the image buffer 1077.

When an image acquired by the camera 1050 is provided to the image buffer 1077, the image distribution module 1075 may provide an address of an image buffer area through the output interface 1076.

The address information is first acquired by the first application 1062, and the first application 1062 may access to an area in which an image is stored through address information to acquire an image. When image acquisition is complete, the first application 1062 may transmit a complete message to the image distribution module 1075, and the second application 1064 may access to an area in which an image is stored through address information to acquire an image. When a complete message of the second application 1064 is transmitted, the image distribution module 1075 may delete (or release) a corresponding image stored at the image buffer 1077.

According to an example embodiment, as shown in FIG. 10F, the first application 1062 and the second application 1064 may simultaneously access to the image buffer 1077.

When an image acquired by the camera is provided to the image buffer 1077, the image distribution module 1075 may provide an address of an image buffer area through the output interface 1076.

The address information may be enabled for simultaneous or sequential access to the first application 1062 and the second application 1064, and the first application 1062 and the second application 1064 may at least partially simultaneously access to an area in which an image is stored through the address information to acquire an image. When image acquisition is complete, the first application 1062 and the second application 1064 transmit a complete message to the image distribution module 1075; and, when a complete message of the first application 1062 and the second application 1064 is received, the image distribution module 1075 may delete (or release) a corresponding image stored at the image buffer 1077.

FIGS. 10G and 10H illustrate an example embodiment that drops a portion of an image frame acquired by a camera.

The camera 1050 may continuously photograph an image frame with a predetermined attribute (e.g., 60 frame/sec) in response to a camera service request of the first application 1062 and the second application 1064.

As shown in FIG. 10G, when a frame 1 is acquired from the camera 1050, the frame 1 may be stored at the image buffer 1077, and address information of the frame 1 may be provided to the first application 1062 and the second application 1064 through the output interface 1076. The first application 1062 and the second application 1064 may simultaneously or sequentially access to an area of the image buffer 1077 through address information. According to an example embodiment, before a complete message arrives from the first application 1062 and the second application 1064, a frame 2 may be transmitted from the camera 1050. When the image buffer 1077 has a size that can store only one frame, in order to store the frame 2, the frame 1 should be deleted; but, because the first application 1062 and the second application 1064 are in a state that does not completely acquire the frame 1, it may not be preferable to delete the frame 1.

Accordingly, before the first application 1062 and the second application 1064 acquire the frame 1, the image distribution module 1075 may drop the frame 2 transmitted from the camera 1050, i.e., may not store the frame 2 at the image buffer 1077.

Thereafter, after the frame 1 is acquired, the first application 1062 and the second application 1064 transmit a complete message; and, when the complete message is entirely received, the image distribution module 1075 may delete the frame 1 and store a frame 3 acquired from the camera 1050 at the image buffer 1077.

As shown in FIG. 10H, even when the image buffer 1077 may store at least two image frames, frame drop of FIG. 10G may occur.

When the frame 1 is acquired from the camera 1050, the frame 1 may be stored at the image buffer 1077, and address information of the frame 1 may be provided to the first application 1062 and the second application 1064 through the output interface 1076. Further, when a frame 2 is acquired, the frame 2 may be stored at the image buffer 1077, and address information of the frame 2 may be provided to the first application 1062 and the second application 1064 through the output interface 1076.

Thereafter, the first application 1062 and the second application 1064 may access to the image buffer 1077 through address information to receive a frame 1 and a frame 2; and, before the first application 1062 and/or the second application 1064 acquire at least one of the frame 1 and the frame 2, a frame 3 may be transmitted from the camera 1050.

Because the image buffer 1077 may store two frames, the image distribution module 1075 may drop the frame 3.

Thereafter, when a complete message of one of the frame 1 and the frame 2 is transmitted from the first application 1062 and the second application 1064, a corresponding frame may be deleted and a frame 4 received from the camera 1050 may be stored at the image buffer 1077.

FIG. 10I is a message flow diagram illustrating an example embodiment that performs an image processing within the camera module 1050.

As shown in FIG. 10I, the camera module 1050 may acquire a high resolution image and generate a low resolution image from the high resolution image. The generated high resolution image and low resolution image each may be stored at the image buffer 1077, and the image distribution module 1075 may provide a high resolution frame to the first application 1062 and provide a low resolution frame to the second application 1064 through the output interface 1076.

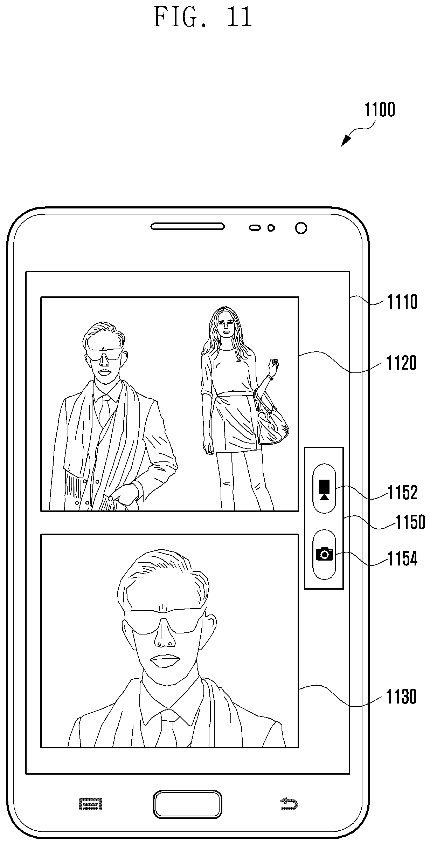

FIG. 11 is a diagram illustrating an example of a screen in which global UX is displayed on an electronic device according to various example embodiments of the present disclosure.

As shown in FIG. 11, as a first application 1120 and a second application 1130 are simultaneously executed in a foreground, and a screen corresponding to the first application 1120 and a screen corresponding to the second application 1130 may be simultaneously displayed within a display 1110.

According to various example embodiments, the processor (e.g., the processor 530 of FIG. 5) may determine whether at least two of applications executed in the foreground are applications having the same function and may display global UX 1150 for controlling a common function of at least two applications related to the same function together with the first application 1120 and the second application 1130. For example, when both the first application 1120 and the second application 1130 are applications related to a camera function, the global UX 1150 including an image capture button 1154 and a record button 1152 may be displayed on the display 1110.

According to an example embodiment, it may be recognized that camera use of the same object is started through a camera open module or an availability determination module according to a camera open request of the first application 1120 and the second application 1130; and, in this case, the global UX 1150 may be driven.

According to an example embodiment, the global UX 1150 may be a separate application or may be defined on a framework.

According to various example embodiments, the processor may transmit a control instruction corresponding to a touch input to the first application 1120 and the second application 1130 in response to detection of a touch input to the global UX 1150. For example, when the capture button 1154 of the global UX 1150 is pressed, the camera module may capture an image and the captured image may be provided to each of the first application 1120 and the second application 1130. A characteristic that distributes the image acquired by the camera module to the first application 1120 and the second application 1130 has been described with reference to FIGS. 8 to 10.

Accordingly, according to various example embodiments of the present disclosure, an input signal may be provided to a plurality of applications having the same function with a manipulation of one UX 1150.

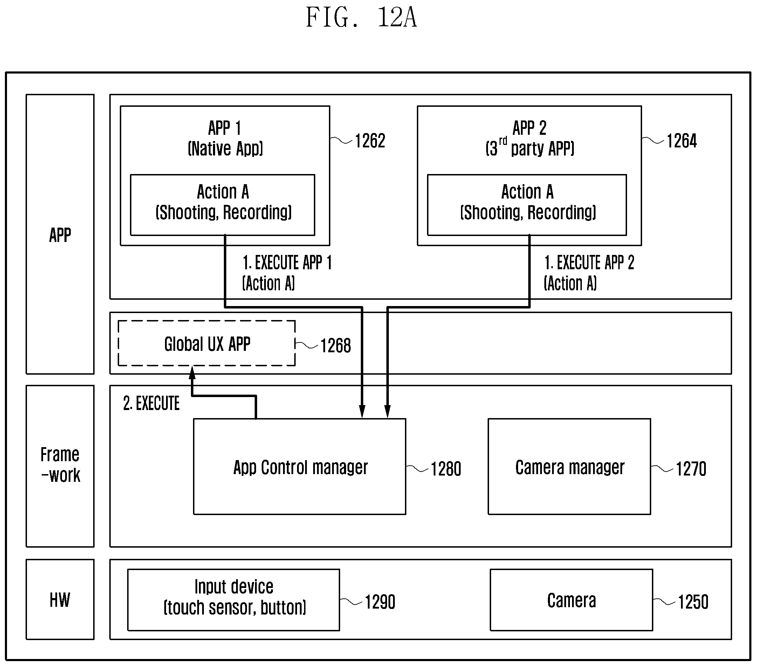

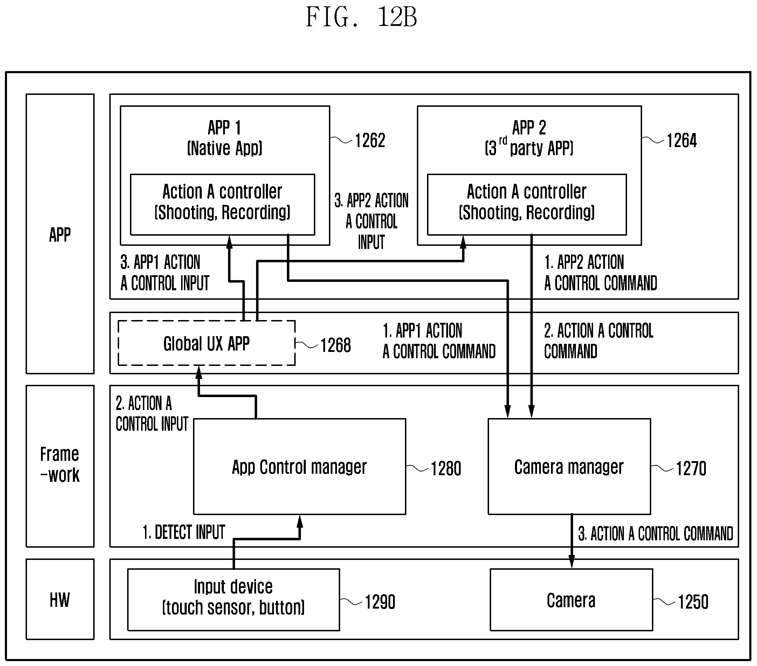

FIGS. 12A and 12B are diagrams illustrating an example signal processing flow according to an input to global UX APP 1268 according to various example embodiments of the present disclosure.

As shown in FIG. 12A, when a first application 1262 and a second application 1264 are executed, an application control manager 1280 of a framework may execute a global UX APP 1268. According to an example embodiment, unlike FIG. 12A, the global UX APP 1268 may be implemented on a framework.

As shown in FIG. 12B, when an input device such as a touch sensor or a button 1290 detects an input, the input is detected in the global UX APP 1268 through the application control manager 1280, and the global UX APP 1268 may transmit a control input according to an input to the first application 1262 and the second application 1264.

The first application 1262 and the second application 1264 may request image capture to a camera manager 1270 according to a control input (e.g., image capture instruction) received from the global UX APP 1268. The camera manager 1270 may request image capture to a camera module 1250 and may provide an image acquired by the camera module 1250 to the first application 1262 and the second application 1264.

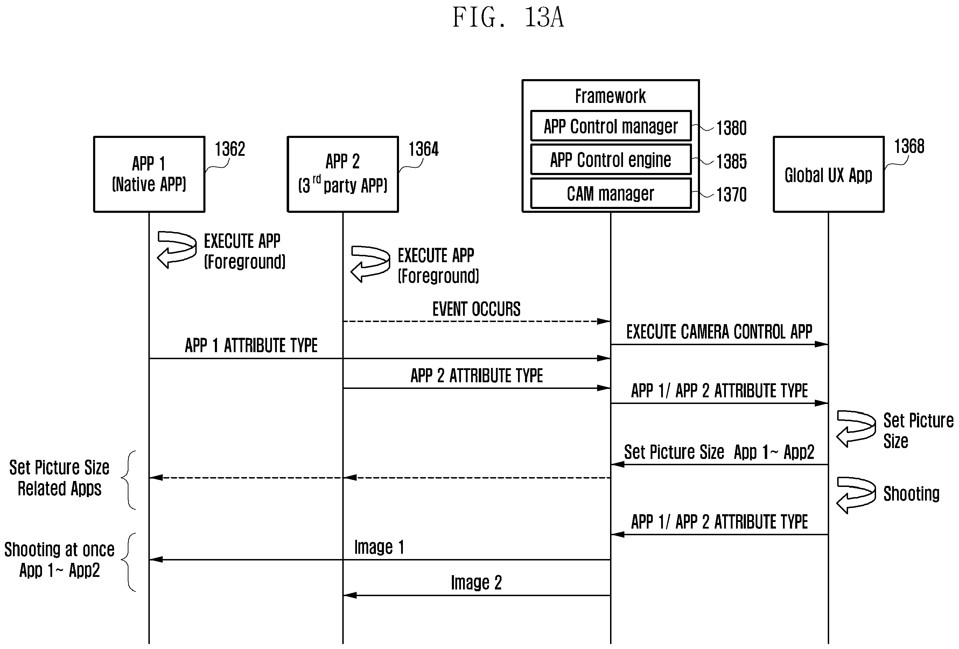

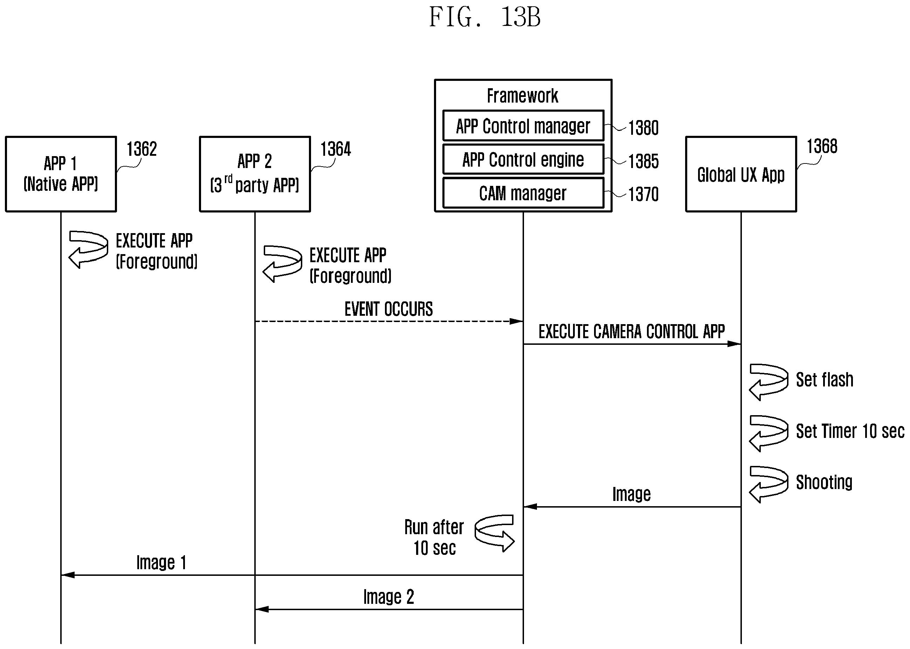

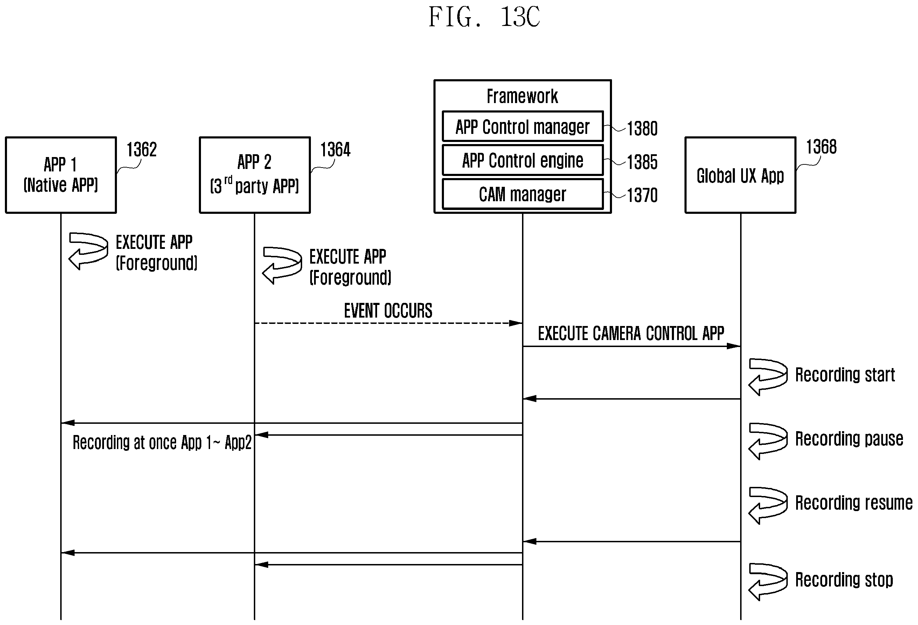

FIGS. 13A, 13B and 13C are message flow diagrams illustrating an example image distribution method according to various example embodiments of the present disclosure.

As shown in FIGS. 13A, 13B and 13C, a first application 1362 and a second application 1364 may be simultaneously executed; and, at a framework, an application control manager 1380, application control engine 1385, and camera manager 1370 may be stored. A global UX APP 1368 may be a separate application or may be stored on a framework.

When the first application 1362 and the second application 1364 are executed in the foreground, the application manager 1380 of the framework may determine that at least two applications related to the same function (e.g., a camera function) are simultaneously executed and execute the global UX APP 1368 related to the control of the camera function.

The first application 1362 and the second application 1364 each may transmit an attribute type, and the camera manager 1370 of the framework may request driving of the camera according to an attribute type of the first application 1362 and the second application 1364.

The user may set an image size with a touch input to the global UX APP 1368, and the application manager 1380 may transmit a control input according to an input of the global UX APP 1368 to the first application 1362 and the second application 1364.

Thereafter, when an image capture instruction is input with a touch input to the global UX APP 1368, the camera may acquire an image, and a first image and a second image may be provided to the first application 1362 and the second application 1364, respectively.

According to an example embodiment, bundle photographing through timer setup can be performed using the global UX APP 1368.

As shown in FIG. 13B, in a state in which the global UX APP 1368 is executed, the user may set flash and input a timer through the global UX APP 1368; and, after a time set to the timer has elapsed, the camera may acquire an image and provide a first image and a second image to the first application 1362 and the second application 1364, respectively.

According to an example embodiment, bundle moving picture photographing can be performed using the global UX APP 1368.

As shown in FIG. 13C, in a state in which the global UX APP 1368 is executed, the user may input record start, pause, restart, and stop through the global UX APP 1368; thus, recording of a moving picture of the first application 1362 and the second application 1364 may be started or stopped.

According to an example embodiment, when the first application 1362 and the second application 1364 are terminated, it may be recognized that camera use of the same object is terminated through a camera open module or an availability determination module according to a camera close request of the application; and, in this case, global UX may be stopped.

An electronic device according to various example embodiments of the present disclosure includes a camera module including image acquiring circuitry and at least one lens; a display that can display an image acquired through the camera module; a processor electrically connected to the camera module and the display; and a memory electrically connected to the processor, the memory storing instructions which, when executed, by the processor cause the processor to provide at least a portion of at least one image acquired through the camera module to the first application in response to a camera service request of a first application and to distribute the at least one image to the first application and the second application, when the processor receives a camera service request from a second application while the processor provides the at least a partial image to the first application.

According to various example embodiments, the instructions may cause the processor to store the at least one image at an image buffer and to distribute the at least one image from the image buffer to the first application and the second application through at least one distribution method.

According to various example embodiments, the instructions may cause the processor to provide an image frame of at least a portion of at least one image stored at the image buffer to the first application and to provide an image frame of another portion to the second application.

According to various example embodiments, the instructions may cause the processor to maintain or change an attribute of at least one image stored at the image buffer and to provide an image in which the attribute is maintained or changed to the first application and the second application.

According to various example embodiments, the instructions may cause the processor to provide an image acquired through a portion of the at least one lens to the first application and to provide an image acquired through another lens to the second application.

According to various example embodiments, the camera service request may be performed through an application programming interface (API) call including an attribute type of an application.

According to various example embodiments, the instructions may cause the processor to maintain or change an attribute of at least one image stored at the image buffer based on an attribute type of an application included in the API call.

According to various example embodiments, when the processor receives a camera service request from the third application while the processor provides at least a portion of the image to the first application or while the processor provides at least a portion of the image to the first application and the second application, the instructions may enable the processor to check an available resource of the memory and the camera module and to transmit an error message to a third application, if the available resource is in shortage.

According to various example embodiments, the instructions may cause the processor to provide at least a portion of one image of the acquired at least one image to the first application in response to a camera service request of the first application and to provide at least another portion of the one image to the second application while providing at least a portion of the one image to the first application in response to a camera service request of the second application.

An electronic device according to various example embodiments of the present disclosure includes a housing including a plurality of surfaces; at least one image sensor exposed through at least one of the surfaces of the housing, and configured to generate image data; a wireless communication circuit positioned inside the housing; a volatile memory positioned inside the housing; at least one processor positioned inside the housing, and electrically connected to the wireless communication circuit and the volatile memory; and a non-volatile memory electrically connected to the processor, wherein the non-volatile memory stores at least a portion of a first application program or a second application program, wherein the non-volatile memory further stores instructions that, when executed, cause the processor to: receive a first request from the first application program, wherein the first request is associated with at least a first portion of the image data from the image sensor; receive a second request from the second application program, wherein the second request is associated with at least a second portion of the image data from the image sensor; process the first request after receiving the first request; and process the second request after receiving the second request, while simultaneously, sequentially, and/or interleavedlyprocessing the first request, without finishing processing the first request.

According to various example embodiments, the instructions may cause the processor to process the first request and the second request by storing the image data in the volatile memory; providing the first portion of the stored image data to the first application program; and providing the second portion of the stored image data to the second application program, wherein the first portion is different from the second portion.

According to various example embodiments, the instructions cause the processor to process the first request and the second request by storing the image data in the volatile memory; providing the first portion of the stored image data to the first application program at a first rate; and providing the second portion of the stored image data to the second application program at a second rate, wherein the first rate is different from the second rate.

According to various example embodiments, the instructions cause the processor to process the first request and the second request by controlling a first image sensor of the at least one image sensor with a first command in response to the first request and controlling a second image sensor of the at least one image sensor with a second command in response to the second request, wherein the first command is different from the second command, and wherein the first image sensor is different from the second image sensor.

According to various example embodiments, the first command may be associated with operation with a first focal length, and wherein the second command may be associated with operation with a second focal length different from the first focal length.

According to various example embodiments, the non-volatile memory stores a framework over which the at least a portion of a first application program or a second application program operates, wherein at least a portion of the stored instructions is part of the framework.

According to various example embodiments, the device may further include an autonomous moving mechanism including at least one of a robotic leg or arm, a wheel, a caterpillar, a propeller, a wing, a fin, an engine, a motor, or a rocket, and wherein the first application program may be associated with operation of the moving mechanism.

According to various example embodiments, the second application program may exist at an external device that can communicate with the electronic device, and wherein the wireless communication circuit may be configured to communicate with the at least a portion of the second application program.

An electronic device according to various example embodiments of the present disclosure includes a camera module including image acquiring circuitry and at least one lens; a display that can display an image acquired through the camera module; a processor electrically connected to the camera module and the display; and a memory electrically connected to the processor, the memory storing instructions which, when executed, cause the processor to execute a first application and a second application, to provide a Graphical User Interface (GUI) that can control an image photographing function in response to a camera service request of the first application and the second application, to acquire at least one image in response to an input to the GUI, to provide at least a portion of the acquired image to the first application, and to provide at least another image to the second application.

According to various example embodiments, the instructions may cause the processor to store the at least one image acquired by the camera module at an image buffer, and to maintain or change at least a portion of at least one image stored at the image buffer based on an attribute type of the first application and to provide the at least a portion to the first application, and to maintain or change at least a portion of at least one image stored at the image buffer based on an attribute type of the second application and to provide the at least a portion to the second application.

According to various example embodiments, the instructions may cause the processor to provide a first image acquired by a first lens of the camera module to the first application in response to an input to the GUI and to provide a second image acquired by a second lens of the camera module to the second application.

According to the present disclosure, an electronic device that can provide a camera service through a plurality of applications and a method of providing an image acquired by an image sensor to an application can be provided.

Although various example embodiments of the present disclosure have been described in detail hereinabove, it should be clearly understood that many variations and modifications of the basic concepts herein described, which may appear to those skilled in the art, will still fall within the spirit and scope of the example embodiments of the present disclosure as defined in the appended claims and their equivalents.

## Claims

1. An electronic device, comprising:
a camera module comprising image acquiring circuitry and at least one lens;
a display configured to display an image acquired through the camera module;
a processor electrically connected to the camera module and the display; and
a memory electrically connected to the processor,
wherein the memory stores instructions which, when executed, cause the processor to provide at least a portion of at least one image acquired through the camera module to a first application in response to a camera service request of the first application and to distribute the at least one image to the first application and a second application, when the processor receives a camera service request from the second application while the processor provides the at least a partial image to the first application.

2. The electronic device of claim 1, wherein the instructions cause the processor to store the at least one image at an image buffer and to distribute the at least one image from the image buffer to the first application and the second application through at least one distribution method.

3. The electronic device of claim 2, wherein the instructions cause the processor to provide an image frame of at least a portion of at least one image stored at the image buffer to the first application and to provide an image frame of another portion of the at least one image to the second application.

4. The electronic device of claim 2, wherein the instructions cause the processor to maintain or change an attribute of at least one image stored at the image buffer and to provide an image in which the attribute is maintained or changed to the first application and the second application.

5. The electronic device of claim 1, wherein the instructions cause the processor to provide an image acquired through a portion of the at least one lens to the first application and to provide an image acquired through another lens to the second application.

6. The electronic device of claim 1, wherein the camera service request is performed through an Application Programming Interface (API) call comprising an attribute type of an application.

7. The electronic device of claim 6, wherein the instructions cause the processor to maintain or change an attribute of at least one image stored at the image buffer based on an attribute type of an application included in the API call.

8. The electronic device of claim 1, wherein the instructions cause the processor to check an available resource of the memory and the camera module and to transmit an error message to a third application, if the available resource is in shortage, when the processor receives a camera service request from the third application while the processor provides at least a portion of the image to the first application or while the processor provides at least a portion of the image to the first application and the second application.

9. The electronic device of claim 1, wherein the instructions cause the processor to provide at least a portion of one image of the acquired at least one image to the first application in response to a camera service request of the first application and to provide at least another portion of the at least one image to the second application while providing at least a portion of the at least one image to the first application in response to a camera service request of the second application.

10. A method for providing an image acquired by a camera module comprising:
providing at least a portion of at least one image acquired through the camera module to a first application in response to a camera service request of a first application;
receiving a camera service request from a second application while providing the at least a portion of at least one image to the first application; and
distributing the at least one image to the first application and the second application.

11. The method of claim 10, further comprises:
buffering the at least one image at an image buffer; and
wherein the distributing the at least one image comprises:
providing an image frame of at least a portion of at least one image stored at the image buffer to the first application; and
providing an image frame of another portion of the at least one image to the second application.

12. The method of claim 10, further comprises:
buffering the at least one image at an image buffer; and
wherein the distributing the at least one image comprises:
providing an image frame of at least a portion of at least one image stored at the image buffer to the first application; and
providing an image frame of another portion of the at least one image to the second application.

13. The method of claim 10, wherein the distributing the at least one image comprises:
providing an image acquired through a portion of the at least one lens to the first application; and
providing an image acquired through another lens to the second application.

14. The method of claim 10, wherein the camera service request is performed through an Application Programming Interface (API) call comprising an attribute type of an application.

15. The method of claim 10, further comprising:
receiving a camera service request from a third application while providing at least a portion of the image to the first application or while providing at least a portion of the image to the first application and the second application;
checking an available resource of a memory and the camera module; and
transmitting an error message to a third application, if the available resource is in shortage.
